# EUROPÄISCHE PATENTSCHRIFT

(11) **EP 2 757 010 B1**
(45) Veröffentlichungstag und Bekanntmachung des Hinweises auf die Patenterteilung: **31.05.2017**
(21) Anmeldenummer: 14151096.6
(22) Anmeldetag: 14.01.2014
(51) Int. Cl.: B60T 13/26, B60T 15/60, B60T 17/18, B60T 15/20

(54) **Ventileinrichtung für eine Druckluftanlage eines Anhängers eines Nutzfahrzeugs**
Valve device for a compressed air system of a trailer of a commercial vehicle
Système de soupape pour une installation d'air comprimé d'une remorque de véhicule utilitaire

(30) Priorität: 18.01.2013 DE 102013100537
(43) Veröffentlichungstag der Anmeldung: 23.07.2014
(73) Patentinhaber: Haldex Brake Products Aktiebolag, 261 24 Landskrona (SE)
(72) Erfinder: Sulzyc, Georg, 68305 Mannheim (DE)
(74) Vertreter: REHBERG HÜPPE + PARTNER

(56) Entgegenhaltungen:
- EP-A1- 1 504 976
- EP-A2- 1 188 635
- EP-A2- 2 058 193
- EP-A2- 2 193 965
- WO-A1-00/30912
- DE-A1-102007 008 504
- DE-A1-102007 061 908
- DE-B3-102007 053 767
- GB-A- 2 472 461

## Beschreibung

### TECHNISCHES GEBIET DER ERFINDUNG

Die Erfindung betrifft eine Ventileinrichtung, welche für eine Druckluftanlage eines Anhängers eines Nutzfahrzeugs bestimmt ist. Die Ventileinrichtung verfügt über ein manuell betätigbares Parkventil sowie ein manuell betätigbares Löseventil. Über diese kann manuell, insbesondere zur Ermöglichung eines Rangierens des Anhängers in einer Notbremssituation und/oder für abgekuppelten Anhänger, eine Bremswirkung über eine Betriebsbremse bzw. eine Federspeicherbremse des Anhängers herbeigeführt und beseitigt werden. Darüber hinaus verfügt die Ventileinrichtung über ein Notbremsventil, welches die Beaufschlagung einer Betriebsbremse in Abhängigkeit von einem Druck an einem mit dem Kupplungskopf Vorrat verbindbaren Anschluss steuert. Beispielsweise kann die Betriebsbremse über das Notbremsventil automatisch betätigt werden, wenn der Kupplungskopf Vorrat von einem Gegen-Kupplungskopf eines Zugfahrzeugs auf einem Betriebshof abgekoppelt wird oder der Kupplungskopf Vorrat in einer Notbremssituation während des Fahrbetriebs abreißt.

### STAND DER TECHNIK

EP 1 188 634 B1 offenbart eine Ventileinrichtung mit einem Löseventil, einem Anhängerbremsventil und einem Parkventil. Das Anhängerbremsventil besitzt einen Anschluss für einen Kupplungskopf Bremse, einen Anschluss für eine Bremssteuerleitung, welcher über eine Steuereinheit in Form eines EBS-Modulators mit den Betriebsbremsen verbunden ist, einen Anschluss für ein Parkventil, einen Anschluss für einen Behälter sowie zwei mit dem Löseventil verbundene Anschlüsse, die in der Druckschrift als Versorgungsanschluss und als Löseanschluss bezeichnet sind. In dem Anhängerbremsventil ist ein Notbremsventil eingesetzt. Je nach Druckbeaufschlagung eines Steuerraums des Notbremsventils, welcher bei Löseventil in der Stellung "Fahrt" mit dem Kupplungskopf Vorrat verbunden ist, nimmt das Notbremsventil eine Normalbetriebsstellung ein (druckbeaufschlagter Kupplungskopf Vorrat) oder eine Notbremsstellung ein (druckloser Kupplungskopf Vorrat). In der Normalbetriebsstellung leitet das Notbremsventil den Druck an dem Anschluss, der mit dem Kupplungskopf Bremse verbunden ist, durch an den Anschluss, der über den EBS-Modulator mit den Betriebsbremsen verbunden ist. Somit kann über das Bremspedal und den über den Kupplungskopf Bremse übertragenen Bremssteuerdruck in der Normalbetriebsstellung die Beaufschlagung der Betriebsbremsen vom Fahrer vorgegeben werden. Darüber hinaus ist über das Anhängerbremsventil der mit dem Behälter verbundene Anschluss über ein integriertes Rückschlagventil mit dem mit dem Parkventil verbundenen Anschluss verbunden. In Öffnungsrichtung des Rückschlagventils kann Druckluft aus dem Behälter über das Anhängerbremsventil zu dem Parkventil gelangen. Befindet sich das Parkventil in der Löse- oder Fahrtstellung, kann die dem Behälter entstammende Druckluft dazu genutzt werden, um die Federspeicherbremsen zu lösen. In der Normalbetriebsstellung des Notbremsventils sperrt das Notbremsventil eine das Rückschlagventil umgehende Bypassleitung. Kommt es insbesondere bei einer intensiven modulierten Bremsung über die Betriebsbremse mit einem hohen Druckluftverbrauch zu einer Reduzierung des Drucks in dem Behälter, wird eine Reduktion des Druckes in einer Federspeicherkammer der Federspeicherbremsen durch eine Rückströmung in Richtung des Behälters unterbunden durch das in diese Rückströmrichtung sperrende Rückschlagventil, wenn gleichzeitig die Bypassleitung gesperrt ist. Kommt es hingegen zu einem Abriss der Vorratsleitung, nimmt das Notbremsventil automatisch die Notbremsstellung ein. In dieser Notbremsstellung wird die Bremssteuerleitung gegenüber dem Kupplungskopf Vorrat abgesperrt. Vielmehr wird der mit dem EBS-Modulator und den Betriebsbremsen verbundene Anschluss des Anhängersteuerventils über das Notbremsventil mit dem mit dem Behälter verbundenen Anschluss verbunden, womit eine Abbremsung des Fahrzeugs über die Betriebsbremse erfolgt, was unter EBS-Modulation erfolgen kann. Gleichzeitig öffnet das Notbremsventil die das Rückschlagventil umgehende Bypassleitung, was zur Folge hat, dass der Druck in den Federspeicherkammern der Federspeicherbremse dem (unter Umständen sinkenden) Druck in dem Behälter entspricht. Eine nachlassende Betriebsbremswirkung mit abnehmendem Druck in dem Behälter wird somit ausgeglichen durch eine zunehmende Entlüftung der Federspeicherkammern auf das Druckniveau des Behälters. Das Notbremsventil gemäß EP 1 188 634 B1 ist in Schieberbauart ausgebildet.

Auch gemäß DE 103 35 717 B4 nimmt ein Notbremsventil für hinreichenden Druck an einem Kupplungskopf Vorrat eine Normalbetriebsstellung ein, in welcher das Notbremsventil einen Kupplungskopf Vorrat mit einer hier über ein Relaisventil geführten Bremssteuerleitung verbindet. Kommt es zu einem Druckabfall an dem Kupplungskopf Vorrat, wird die Verbindung zwischen dem Kupplungskopf Bremse und der Bremssteuerleitung geschlossen. Gleichzeitig wird über das Notbremsventil der Behälter mit der Bremssteuerleitung verbunden, wodurch eine Notbremsung über die Betriebsbremse des Kombi-Bremszylinders ausgelöst wird. Während in der Normalbetriebsstellung des Notbremsventils der Druck in einer Federspeicherbremskammer durch ein Rückschlagventil gesichert ist gegenüber unerwünschten Druckeinbrüchen, insbesondere bei intensiven ABS- oder EBS-Bremsungen, wird mit Überführung eines Notbremskolbens des Notbremsventils bewegungsgesteuert das Rückschlagventil in eine Öffnungsstellung überführt, womit auch eine Verbindung zwischen dem Behälter und der Federspeicherkammer geschaffen wird. Auch hier erfolgt für einen Druckabfall in dem Behälter ein automatisierter Ausgleich eines Abfalls der Bremskraft an der Betriebsbremse durch eine zunehmende Entlüftung der Federspeicherbremskammern auf das sich verringernde Druckniveau des Behälters.

Auch DE 10 2007 053 765 A1 offenbart eine Ventileinrichtung mit einem Löseventil, einem Anhängerbremsventil mit integriertem Notbremsventil sowie einem Parkventil. Ein den Druck in den Federspeicherbremskammern sicherndes Rückschlagventil wird hier entsprechend DE 103 35 717 B4 bewegungsgesteuert mit der Bewegung des Notbremskolbens in die Notbremsstellung geöffnet. Das Parkventil ist mit einem Betätigungskolben ausgebildet. Der Betätigungskolben ist über eine Feder beaufschlagt. Über den Betätigungskolben wird der Ventilschieber des Parkventils grundsätzlich in die Parkstellung überführt, wobei der Betätigungskolben ausschließlich in Richtung dieser Parkstellung Kräfte auf den Ventilschieber ausüben kann. Hierzu ist der Betätigungskolben lediglich einseitig wirkend über eine Anlagefläche mit dem Ventilschieber gekoppelt. Auf der der Feder gegenüberliegenden Seite wird der Betätigungskolben beaufschlagt mit dem Druck an dem Kupplungskopf Vorrat. Für hinreichenden Druck an dem Kupplungskopf Vorrat bewegt sich der Betätigungskolben von dem Anschlag des Ventilschiebers weg. Für derartige Aufhebung der Kopplung zwischen Betätigungskolben und Ventilschieber kann das Parkventil manuell in die Parkstellung oder die Lösestellung überführt werden. Im Fahrbetrieb des Anhängers mit dem Parkventil in der Lösestellung führt ein Druckeinbruch an dem Kupplungskopf Vorrat dazu, dass der Betätigungskolben über die Feder in Richtung des Ventilschiebers bewegt wird und den Ventilschieber durch die einseitige Kopplung von der Lösestellung in die Parkstellung überführt. Dies hat zur Folge, dass ein Anschluss des Parkventils entlüftet wird. Dieser Anschluss des Parkventils ist verbunden mit einem Eingang eines Wechselventils, dessen anderer Eingang verbunden ist mit der Bremssteuerleitung ausgangsseitig des Anhängerbremsventils, welche hier mit einem Steueranschluss einer EBS-Steuereinheit verbunden ist. Der Ausgang des Wechselventils ist mit der Federspeicherbremskammer verbunden. Für hinreichenden Druck in der Bremssteuerleitung in einer Notbremssituation erfolgt die Herbeiführung der Notbremswirkung ausschließlich über die Beaufschlagung der Betriebsbremskammer über die EBS-Steuerleitung, während der überwiegende Druck der Bremssteuerleitung an dem Eingang des Wechselventils der Federspeicherbremskammer zugeführt wird, welcher größer ist als der Lösedruck der Federspeicherbremse. Kommt es zu einem Abfall des Drucks in dem Behälter, sinkt die über die EBS-Steuereinheit ausgesteuerte Bremswirkung der Betriebsbremskammer, während automatisch eine Entlüftung der Federspeicherbremskammer auf das Druckniveau der Bremssteuerleitung über das Wechselventil erfolgt mit sukzessiver Übernahme der Notbremskraft durch die Federspeicherbremse.

Weiterer Stand der Technik ist aus DE 198 53 718 A1, DE 198 18 982 A1 und DE 30 31 105 A1 bekannt.

### AUFGABE DER ERFINDUNG

Der vorliegenden Erfindung liegt die Aufgabe zugrunde, eine Ventileinrichtung vorzuschlagen, welche verbessert ist insbesondere hinsichtlich
- der Beeinflussungsmöglichkeiten der Beaufschlagung der Betriebsbremse einerseits und der Federspeicherbremse andererseits bei dem Befüllen der Druckluftanlage, dem Fahrantritt, in einer Notbremssituation und/oder bei einem Parken und Rangieren des Anhängers ohne Zugfahrzeug,
- der Gestaltungsmöglichkeiten der Ansprech- oder Lösedrücke der Notbremsfunktion über die Betriebsbremse und die Federspeicherbremse,
- der Beeinflussung einer Reihenfolge des Betätigens oder Lösens der Federspeicherbremse und/oder der Betriebsbremse und/oder
- der Vermeidung einer Funktionsbeeinträchtigung bei einem Blockieren eines Ventilelements.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung basiert zunächst auf der Erkenntnis, dass für die eingangs genannten Lösungen des Standes der Technik das Zuschalten der Federspeicherbremsen oder die Aufhebung der Wirkung des Rückschlagventils, welches die Federspeicherbremszylinder gegenüber Druckeinbrüchen im Behälter bei intensiver modulierter Betriebsbremsung schützt, zwangsgekoppelt ist an die Stellung des Notbremsventils und die Bewegung des Notbremskolbens. Nachteilig hieran ist, dass bei einer Funktionsbeeinträchtigung des Notbremsventils, beispielsweise bei einer Blockade der Bewegung des Notbremskolbens sowohl die Notbremsfunktion als auch das Zuschalten der Federspeicherbremsen oder die Aufhebung der Wirkung des Rückschlagventils nicht mehr funktioniert.

Erfindungsgemäß verfügt die Ventileinrichtung über ein manuell betätigbares Parkventil sowie ein manuell betätigbares Löseventil. Ein Notbremsventil steuert die Beaufschlagung einer Betriebsbremse in Abhängigkeit von einem Druck an einem mit dem Kupplungskopf Vorrat verbindbaren Anschluss. Das Notbremsventil ist hierbei je nach dem Druck an dem Kupplungskopf Vorrat oder dem Druck in einem Behälter umschaltbar von einer Normalbetriebsstellung in eine Notbremsstellung mit aus dem Behälter betätigter Betriebsbremse, wobei die Umschaltung bei einem Umschaltdruck des Notbremsventils erfolgt. Erfindungsgemäß ist zusätzlich zu dem Notbremsventil ein Federspeicherventil vorhanden. Dies steuert, insbesondere wenn sich das Parkventil in der Lösestellung befindet, die Druckbeaufschlagung einer Federspeicherbremse (und damit vorzugsweise auch das Lösen der Federspeicherbremse) in Abhängigkeit von einem Druck an einem mit dem Kupplungskopf Vorrat verbindbaren Anschluss und/oder in Abhängigkeit von einem mit dem Behälter verbundenen Anschluss. Hierbei kann das Federspeicherventil unmittelbar auf die Federspeicherbremse einwirken oder bspw. unter Zwischenschaltung des Parkventils, womit dann die Druckbeaufschlagung der Federspeicherbremse zusätzlich zu dem Federspeicherventil auch von der Stellung des Parkventils abhängig ist. Vorzugsweise bewirkt das Federspeicherventil vor dem Erreichen seines Umschaltdruckes eine Entlüftung der Federspeicherbremskammer, während mit Überschreiten des Umschaltdruckes die Federspeicherbremskammer belüftet wird. Hingegen erfolgt für das Notbremsventil vor dem Erreichen seines Umschaltdruckes eine Belüftung der Betriebsbremsen, während mit Überschreiten des Umschaltdruckes die Betriebsbremsen entlüftet werden.

Die Erfindung schlägt vor, dass das Federspeicherventil einerseits und das Notbremsventil andererseits funktional voneinander unabhängig sind. Hierunter wird insbesondere verstanden, dass die Betriebsstellung des Federspeicherventils und des Notbremsventils nicht mechanisch miteinander gekoppelt sind. Kommt es somit zu einer Blockade eines Ventilelements des Federspeicherventils oder aber des Notbremsventils, kann das andere Ventil noch seine Funktion erfüllen. Damit kann auch im Fall der erläuterten Blockade des Ventilelements immer noch entweder die Notbremsfunktion, welche vorzugsweise auf die Betriebsbremse einwirkt, oder aber eine Federspeicherbremsfunktion ausgeführt werden. Beispielsweise ist erfindungsgemäß bei dem Versagen des Federspeicherventils infolge einer Blockade oder eines Verklemmens eines Ventilelements immer noch die Nutzung des Notbremsventils möglich, womit beispielsweise gewährleistet ist, dass bei abgekoppeltem Anhänger und/oder in einer Notbremssituation eine Notbremsung über die Betriebsbremse erfolgt. Darüber hinaus ist unter Umständen erfindungsgemäß ermöglicht, dass durch die Trennung der Funktionen einerseits auf das Federspeicherventil und andererseits auf das Notbremsventil die konstruktive Ausgestaltung der genannten Ventile vereinfacht werden kann und unter Umständen auch eine kompakte Bauweise der Ventileinrichtung ermöglicht ist.

Vorzugsweise sind das Federspeicherventil und das Notbremsventil pneumatisch miteinander gekoppelt, wobei für eine Veränderung der Betriebsstellung des Federspeicherventils und des Notbremsventils auch eine gemeinsame Druckluftquelle oder ein gemeinsamer Steuerdruck zuständig sein kann. Hierbei kann eine Umschaltung des Federspeicherventils und des Notbremsbremsventils auch bei denselben Umschaltdrücken erfolgen, so dass diese Ventile "im Normalfall", also ohne Blockade der Ventilelemente, gleichzeitig umgeschaltet werden.

Ohne dass dies zwingend der Fall ist, umfasst die Erfindung Ausführungsformen, bei welchen sowohl das Notbremsventil als auch das Federspeicherventil integraler Bestandteil eines Anhängerbremsventils sind.

Für einen weiteren Vorschlag der Erfindung wird vorgeschlagen, dass das Federspeicherventil einerseits und das Notbremsventil andererseits unterschiedliche Umschaltdrücke besitzen. Durch den erfindungsgemäßen Einsatz des Federspeicherventils und des Notbremsventils mit unterschiedlichen Umschaltdrücken kann die Druckbeaufschlagung der Betriebsbremse einerseits und der Federspeicherbremse andererseits für unterschiedliche Drücke an dem Kupplungskopf Vorrat bzw. einem Behälter herbeigeführt bzw. beseitigt werden. Für die Auslegung der unterschiedlichen Umschaltdrücke gibt es vielfältige Möglichkeiten. Um lediglich ein die Erfindung nicht beschränkendes Beispiel zu nennen, kann der Umschaltdruck für das Notbremsventil höher gewählt werden als der Umschaltdruck für das Federspeicherventil. Diese Ausgestaltung hat zur Folge, dass für das Befüllen der Druckluftanlage zunächst nur das Federspeicherventil umschaltet. Eine zeitlich verzögerte Umschaltung des Notbremsventils bei einem höherem Umschaltdruck erfolgt erst dann, wenn bei dem Federspeicherventil bereits der Lösedruck für den Federspeicher vorliegt, so dass das Umschalten des Notbremsventils lediglich dann erfolgt, wenn die Federspeicherbremse bereits gelöst ist. Hierdurch kann gewährleistet werden, dass die Beseitigung der Betriebsbremswirkung über die Umschaltung des Notbremsventils nicht erfolgt, bevor tatsächlich der Federspeicher vollständig gelöst ist, womit der Anhänger unter Umständen mit einer "schleifenden" Federspeicherbremse losfahren würde. Im Rahmen der vorliegenden Erfindung ist allerdings durchaus auch eine umgekehrte Auslegung möglich, für welche das Notbremsventil bei einem geringeren Umschaltdruck umschaltet als das Federspeicherventil. In diesem Fall würde zunächst die über das Notbremsventil gesteuerte Bremswirkung an den Betriebsbremsen beseitigt werden, während vor Erreichen des Lösedrucks und dem Umschalten des Federspeicherventils der Anhänger noch gegen eine Bewegung über die Federspeicherbremse gesichert ist. Grundsätzlich ist somit über die erfindungsgemäße Ausgestaltung der Ventileinrichtung erstmals ermöglicht, dass die Reihenfolge der pneumatischen Beaufschlagung der Betriebsbremse einerseits und der Federspeicherbremse andererseits konstruktiv vorgegeben wird, nämlich über die konstruktive Gestaltung der Umschaltdrücke, für welche das Federspeicherventil und das Notbremsventil umschalten.

In weiterer Ausgestaltung der Erfindung ist ein Überströmventil vorhanden ist, über welches Nebenverbraucher und insbesondere eine Luftfederanlage druckbeaufschlagt werden und welches in die Ventileinrichtung oder sogar in das Anhängerbremsventil integriert sein kann. Erfindungsgemäß kann dann auch mittels des Überströmventil die Reihenfolge für die Druckbeaufschlagung des Nebenverbraucherkreises, der Luftfederanlage, der Federspeicherbremse und der Betriebsbremse frei gewählt werden. Das Überströmventil kann hierbei in beliebiger Bauart ausgebildet sein, bspw. mit oder ohne (begrenzte) Rückströmung und/oder schaltbar.

In bevorzugter Ausgestaltung der Erfindung ist der Steuerdruck des Federspeicherventils von einer Betriebsstellung des Notbremsventils, vorzugsweise während der Befüllung der Druckluftanlage, abhängig. Um lediglich ein mögliches Beispiel hierfür zu nennen, kann für entleerte Druckluftanlage mit Anschluss des Kupplungskopfs Vorrat das Löseventil automatisch umgeschaltet werden. Mit dieser Umschaltung erfolgt die Beaufschlagung des Notbremsventils mit dem Druck an dem Kupplungskopf Vorrat. In diesem Fall ist aber u. U. eine Verbindung des Kupplungskopfs Vorrat über das Notbremsventil mit dem Behälter und mit einem Steueranschluss des Federspeicherventils zunächst abgesperrt. Diese Verbindung wird erst geöffnet mit Umschaltung des Notbremsventils, also mit Überschreiten des Umschaltdrucks des Notbremsventils. Erst in der umgeschalteten Stellung erfolgt die Befüllung des Behälters über den Kupplungskopf Vorrat und das Notbremsventil. Dieser nun ansteigende Druck wird dem Steueranschluss des Federspeicherventils zugeführt. Auf diese Weise kann die zeitliche Reihenfolge des Umschaltens des Notbremsventils einerseits und des Federspeicherventils vorgegeben werden, indem zwingend das Notbremsventil vor (oder allenfalls gleichzeitig) mit dem Federspeicherventil umgeschaltet wird. Im erstgenannten Fall erfolgt somit das Lösen der Betriebsbremse vor dem Lösen der Federspeicherbremse.

In weiterer Ausgestaltung der Erfindung ist das Löseventil in dem zu dem Notbremsventil führenden Steuerleitungszweig angeordnet. Demgemäß ist es möglich, über die Stellung des Löseventils einen Steuerdruck des Notbremsventils zu beeinflussen, so dass letztendlich auch die Betriebsstellung des Notbremsventils über die Stellung des Löseventils beeinflusst werden kann. Die Erfindung findet beispielsweise Anwendung bei einem Einsatz eines Löseventils gemäß der Europäischen Richtlinie ECE R.13, welches für angeschlossenen Kupplungskopf Vorrat und Druckbeaufschlagung des entsprechenden Eingangs des Löseventils automatisch umgeschaltet wird in die Fahrtstellung. In dieser Fahrtstellung erfolgt über das Löseventil die Zufuhr des Drucks an dem Kupplungskopf Vorrat als Steuerdruck zu dem Notbremsventil. Ist hingegen der Kupplungskopf Vorrat abgekoppelt oder abgerissen, ist die manuelle Umschaltung des Löseventils in die andere Stellung ermöglicht. In dieser wird dann ein Druck aus dem Behälter als Steuerdruck für das Notbremsventil verwendet. Somit kann je nach Stellung des Löseventils über den Benutzer mittelbar auch die Stellung des Notbremsventils beeinflusst werden (sofern ausreichender Druck in dem Behälter vorhanden ist).

In weiterer Ausgestaltung der Erfindung ist das Löseventil vor einer Verzweigung zu den beiden Steuerleitungszweigen für das Federspeicherventil und das Notbremsventil angeordnet. Somit führt die Umschaltung des Löseventils gleichzeitig zu einem veränderten Steuerdruck beider Ventile. Trotz dieser gleichzeitigen Verbindung der Steueranschlüsse des Notbremsventils und des Federspeicherventils entweder mit dem Kupplungskopf Vorrat oder mit dem Behälter kann im Rahmen der Erfindung eine Umschaltung lediglich des Federspeicherventils oder des Notbremsventils erfolgen, wenn die Umschaltdrücke unterschiedlich gewählt werden.

Für die Ausgestaltung des Löseventils, welches im Rahmen der erfindungsgemäßen Ventileinrichtung Einsatz findet, gibt es vielfältige Möglichkeiten, wobei durchaus auch aus dem Stand der Technik bekannte Löseventile ohne konstruktive Veränderung eingesetzt werden können. Für eine besondere Ausgestaltung der Erfindung weist das Löseventil einen Anschluss auf, der mit einem Kupplungskopf Vorrat verbindbar ist. Des Weiteren ist ein Anschluss vorgesehen, über welchen die Ausgabe eines Steuerdrucks für das Notbremsventil (und unter Umständen auch das Federspeicherventil) erfolgt. Ein weiterer Anschluss des Löseventils ist mit einem Behälter verbindbar. Darüber hinaus ist ein Anschluss vorgesehen, über welchen bei befülltem Behälter eine Versorgung des Notbremsventils mit Druckluft möglich ist. Ohne Einschränkung der Erfindung auf diesen Vorteil hat eine derartige Ausgestaltung insbesondere den Vorteil, dass das Anhängerbremsventil nicht mit einem (zusätzlichen) Anschluss für den Behälter ausgestattet sein muss. Vielmehr erfolgt der Anschluss des Behälters an das Löseventil, während das Löseventil einen von dem Behälter entstammenden Druck über den Anschluss für die Versorgung des Notbremsventils an dieses oder an ein Anhängerbremsventil, in welches das Notbremsventil integriert ist, weitergibt. Andererseits ist erfindungsgemäß ermöglicht, dass eine Befüllung des Behälters unter Zwischenschaltung des Anhängerbremsventils erfolgt. Möglich ist hierbei durchaus, dass der Anschluss für den Steuerdruck für das Notbremsventil nicht lediglich zur Übertragung des Steuerdrucks dient, sondern die Druckluft von diesem Anschluss auch, insbesondere über ein Rückschlagventil oder eine Dichtlippe, dem Löseventil und dem Behälter zugeführt wird.

In bevorzugter Ausgestaltung der Erfindung ist zwischen einen Anschluss des Notbremsventils und einen Anschluss des Federspeicherventils ein (insbesondere permanent wirksames) Rückschlagventil zwischengeschaltet. Dieses Rückschlagventil öffnet in Richtung des Federspeicherventils, während dieses Rückschlagventil in Richtung des Notbremsventils sperrt. Dieses Rückschlagventil wird im Rahmen der vorliegenden Erfindung eingesetzt, um einen in einer Federspeicherkammer herbeigeführten Lösedruck zu sichern gegenüber einem Druckabfall in dem Behälter, wie dieser beispielsweise auftritt, wenn eine modulierte Bremsung mit hohem Druckluftverbrauch über die Betriebsbremse vorliegt.

Durchaus möglich ist, dass die Ventileinrichtung, insbesondere das Anhängerbremsventil, mit einem Anschluss für einen Kupplungskopf Bremse ausgestattet ist. In besonderer Ausgestaltung der Erfindung ist allerdings die Ventileinrichtung oder das Anhängerbremsventil ohne einen derartigen Anschluss für einen Kupplungskopf Bremse ausgestattet. Somit erfolgt für diese Ausgestaltung keine Beeinflussung der Druckweitergabe des Steuerdrucks für die Betriebsbremse über das Anhängerbremsventil bzw. die Ventileinrichtung. Vielmehr erfolgt die Weitergabe des Steuerdrucks für die Betriebsbremse von dem Kupplungskopf Bremse auf andere Weise, insbesondere mit unmittelbarer Verbindung des Kupplungskopfs Bremse mit einem pneumatischen Steueranschluss eines ABS- oder EBS-Steuergerät. Dieser Ausgestaltung der Erfindung liegen die Erkenntnis zugrunde, dass die Durchleitung des Steuerdrucks für die Betriebsbremse durch das Anhängerbremsventil zu einer vergrößerten "Schwellzeit" führen kann. Die Schwellzeit bezeichnet die Zeit, innerhalb der eine Druckänderung an dem Kupplungskopf Bremse zu einer entsprechenden Druckänderung an der Betriebsbremse (oder an dem Steuereingang der ABS- oder EBS-Steuereinheit) führt. Die Ursache für die vergrößerte Schwellzeit infolge der Durchleitung durch das Anhängerbremsventil wird darin gesehen, dass in dem Anhängerbremsventil eine Art Drosselung des Luftstroms erfolgen kann, die insbesondere begründet ist durch reduzierte Leitungsquerschnitte und/oder erforderliche wiederholte Umlenkungen des Luftstroms. Die Vergrößerung der Schwellzeit hat den negativen Effekt, dass die Betriebsbremse des Anhängers zeitlich verzögert zur Betätigung des Bremspedals (und zeitlich verzögert zur Erzeugung der Betriebsbremswirkung an dem Zugfahrzeug) betätigt wird. Dies stellt eine Reduktion der Ansprechzeit der Betriebsbremse dar und hat zur Folge, dass der Fahrzeugzug innerhalb der Schwellzeit nur mit einer reduzierten Bremskraft abgebremst wird. Gesetzlich vorgeschrieben ist eine Schwellzeit von maximal 0.44 Sekunden, was konstruktiv besondere Gestaltungsmaßnahmen erfordert. Die konstruktiven Anforderungen zur Reduzierung der Schwellzeit können durch die erfindungsgemäße Ausgestaltung reduziert werden. Andererseits ist für die Ausgestaltung gemäß dem Stand der Technik, für welche der Steuerdruck für die Betriebsbremse durch das Anhängerbremsventil durchgeleitet wird, die ordnungsgemäße Durchleitung unter Umständen abhängig von Betriebsstellungen des Anhängerbremsventils. Kommt es zu einem Defekt des Anhängerbremsventils, kann damit auch die Durchleitung des Steuerdrucks behindert oder in unerwünschter Weise beeinflusst werden, woraus letztendlich eine Fehlfunktion der Betriebsbremse resultieren würde.

In weiterer Ausgestaltung der Erfindung ist ein Steuerraum des Notbremsventils über ein Rückschlagventil mit einem mit dem Behälter verbindbaren Anschluss und/oder einem mit dem Federspeicherventil verbindbaren Anschluss verbunden. Dieses Rückschlagventil öffnet in Richtung des mit dem Behälter verbindbaren Anschlusses und/oder des mit dem Federspeicherventil verbindbaren Anschlusses, während das Rückschlagventil in Richtung des Steuerraums sperrt. Für diese Ausgestaltung kann eine Verbindung des Kupplungskopfs Vorrat über den Steuerraum und das Rückschlagventil mit dem Behälter und/oder dem Federspeicherventil erfolgen, so dass einerseits auch eine Befüllung des Behälters über den Steuerraum und das Rückschlagventil des Federspeicherventils erfolgen kann. Andererseits ist u. U. auch eine Zuführung von Druckluft von dem Kupplungskopf Vorrat zu dem Federspeicherventil unmittelbar über das Federspeicherventil möglich.

Grundsätzlich können die Ventile der Ventileinrichtung in beliebiger konstruktiver Ausgestaltung ausgebildet sein. Beispielsweise können das Notbremsventil und/oder das Federspeicherventil als Sitzventile ausgebildet sein. Durchaus möglich sind auch gemischte Bauarten. In bevorzugter Ausgestaltung der Erfindung ist oder sind allerdings das Notbremsventil und/oder das Federspeicherventil als Schieberventil ausgebildet. Schieberventile sind besonders einfach und kostengünstig herstellbar, wobei gleichzeitig auch eine hohe Betriebssicherheit gewährleistet werden kann.

Für die Ausgestaltung des Federspeicherventils und die hieran vorzusehenden Anschlüsse gibt es vielfältige Möglichkeiten. Für eine Ausgestaltung der Erfindung besitzt das Federspeicherventil einen Anschluss für einen Steuerdruck, einen Anschluss für eine Verbindung mit dem Notbremsventil und einen Anschluss für eine Verbindung mit dem Parkventil. Vorzugsweise ist ein zusätzlicher Anschluss für eine Entlüftung vorgesehen. Hierbei kann ein etwaiger Anschluss für die Entlüftung ausschließlich dem Federspeicherventil zugeordnet sein. Ebenfalls möglich ist, dass eine gemeinsame Entlüftung auch mit dem Notbremsventil und/oder dem Parkventil genutzt ist.

Auch für das Notbremsventil gibt es hinsichtlich der konstruktiven Ausgestaltung und der Anschlüsse vielfältige Möglichkeiten. In einer Ausgestaltung der Erfindung besitzt das Notbremsventil einen Anschluss für einen Steuerdruck, einen Anschluss für eine Verbindung mit dem Behälter, einen Anschluss für eine Verbindung mit dem Federspeicherventil und einen Anschluss für eine Ausgabe eines Steuerdrucks für eine Betriebsbremse. Durchaus möglich ist, dass ein weiterer Anschluss an dem Notbremsventil vorgesehen ist, welcher mit einer Entlüftung verbunden ist.

In weiterer Ausgestaltung besitzt das Notbremsventil einen Anschluss, der sowohl mit einem Steuerraum des Federspeicherventils als auch mit einem Anschluss des Federspeicherventils, welcher in einer Stellung des Federspeicherventils über das Federspeicherventil mit dem Parkventil verbunden ist, verbunden ist. Ein derartiger Anschluss ist somit "multifunktional" genutzt, wodurch sich eine sehr kompakte Bauweise ergeben kann, u. U. mit einem verringertem Leistungs- und Anschlussaufwand.

Bei den vorgenannten Verbindungen einzelner Anschlüsse oder Ventilelemente kann es sich um unmittelbare oder mittelbare Verbindungen handeln. Für einen besonderen Vorschlag der Erfindung ist das Notbremsventil nicht unmittelbar mit einem Steuerraum des Federspeicherventils verbunden. Vielmehr ist zwischen einen Anschluss des Notbremsventils zur Ausgabe eines Steuerdrucks für das Federspeicherventil und den Steuerraum des Federspeicherventils ein Magnetventil zwischengeschaltet. Über das Magnetventil kann der Steuerdruck für das Federspeicherventil bedarfsgerecht (zusätzlich) durch eine elektronische Steuerung beeinflusst werden. Für die Art der Beeinflussung gibt es vielfältige Möglichkeiten. Beispielsweise kann eine Beeinflussung der Höhe des Steuerdrucks erfolgen. Für einen Vorschlag der Erfindung besteht die Beeinflussung des Steuerdrucks darin, dass das Magnetventil eine Sperrstellung oder Entlüftungsstellung und eine Durchlassstellung besitzt. In der Sperrstellung wird der von dem Notbremsventil ausgesteuerte Steuerdruck nicht an den Steuerraum des Federspeicherventils weitergegeben, während in der Durchlassstellung die Weitergabe des Steuerdrucks an das Federspeicherventil erfolgt. Um lediglich ein nicht beschränkendes Beispiel zu nennen, kann für die Notbremssituation des Notbremsventils an dem Anschluss des Notbremsventils, welcher mit dem Steuerraum des Federspeicherventils verbunden ist, ein Lösedruck für die Federspeicherbremse ausgesteuert werden. Das Magnetventil wird dann aber in die Sperrstellung geschaltet, wenn eine hinreichende elektrische Leistungsversorgung vorhanden ist und sich der Anhänger noch mit einer Geschwindigkeit oberhalb einer Grenzgeschwindigkeit bewegt. Auf diese Weise wird gewährleistet, dass für die Notbremssituation eine unter Umständen modulierte Abbremsung des Anhängers über die Betriebsbremse erfolgt, ohne dass ungewollt die Federspeicherbremse einfallen kann. Bricht hingegen die elektrische Leistungsversorgung ein oder ist die Geschwindigkeit des Anhängers unterhalb einer Grenzgeschwindigkeit, kann das Einfallen der Federspeicherbremse zugelassen werden, indem dann das Magnetventil umschaltet in seine Durchlassstellung.

Auch für die Gestaltung eines Ventilschiebers des Federspeicherventils gibt es vielfältige Möglichkeiten. Durchaus möglich ist, dass der Ventilschieber lediglich eine Steuerfläche besitzt, so dass auch die Betriebsstellung des Federspeicherventils lediglich von einem einzigen Steuerdruck abhängig ist. In besonderer Ausgestaltung der Erfindung ist aber der Ventilschieber des Federspeicherventils mit einem Differentialkolben ausgebildet, so dass dieser (mindestens) zwei Steuerflächen besitzt. Um lediglich ein Beispiel zu nennen, kann eine Steuerfläche verbunden sein mit dem Kupplungskopf Vorrat. Bricht während der Fahrt der Druck an dem Kupplungskopf Vorrat ein, insbesondere durch einen Abriss des Kupplungskopfs, kann über diese Steuerfläche ein Umschalten des Federspeicherventils bewirkt werden, welche grundsätzlich die Herbeiführung einer Notbremswirkung über die Federspeicherbremse zur Folge hat. Über die weitere Steuerfläche kann bspw. eine Beaufschlagung mit einem von der EBS-Steuereinheit ausgesteuerten Druck erfolgen. Liegt ein hinreichender Druck an dieser weiteren Steuerfläche vor, kann der Einfall der Federspeicherbremse zunächst vermieden werden, womit einer Abbremsung über die Betriebsbremse Vorrang eingeräumt werden kann. Erst mit Einfall des Drucks an der weiteren Steuerfläche unterhalb eines Grenzwerts des Drucks, der erforderlich ist, um die Umschaltung des Federspeicherventils zu verhindern, kann dann die Aktivierung der Federspeicherbremse erfolgen.

Für die Beaufschlagung der zweiten Steuerfläche des Differentialkolbens kann eine separate Steuereinheit bzw. Ventileinheit mit elektronischer Ansteuerung zuständig sein. Eine besonders kompakte Ausgestaltung ergibt sich, wenn hierfür eine Steuereinheit genutzt wird, welche auch für eine Modulation des Betriebsbremsdrucks verantwortlich ist. Vorzugsweise handelt es sich somit bei der Steuereinheit um die ABS-Steuereinheit oder die EBS-Steuereinheit, welche ohnehin in dem Anhänger vorhanden ist und somit erfindungsgemäß multifunktional genutzt wird.

In weiterer Ausgestaltung der Erfindung ist in der Ventileinrichtung ein Wechselventil vorhanden. Ein Eingang des Wechselventils ist mit einem Anschluss des Notbremsventils verbunden. Ein weiterer Eingang des Wechselventils ist (unmittelbar oder mittelbar) mit dem Kupplungskopf Bremse verbunden. Ein Ausgang des Wechselventils ist mit einem Steueranschluss einer Steuereinheit für die Aussteuerung des Betriebsbremsdrucks verbunden. Auf diese Weise kann besonders einfach gewährleistet sein, dass keine Durchleitung des Steuerdrucks für die Betriebsbremse von dem Kupplungskopf Bremse durch das Anhängerbremsventil erfolgen muss. Vielmehr gibt das Wechselventil von dem Druck des Anschlusses des Notbremsventils einerseits und dem Druck des Kupplungskopfs Bremse den jeweils größeren Druck weiter.

Im Rahmen der vorliegenden Erfindung wird unter einem Wechselventil insbesondere ein Ventil verstanden, dessen Betriebsstellung von dem Druck an zwei eingangsseitigen Anschlüssen abhängig ist und bei welchem ein ausgangsseitiger Anschluss gekoppelt ist mit dem eingangsseitigen Anschluss, dessen Druck größer ist als der Druck an dem anderen Steueranschluss oder dessen Druck um eine vorgegebene Druckdifferenz größer ist als der Druck an dem anderen eingangsseitigen Anschluss. Somit umfasst das Wechselventil beispielsweise entsprechende Doppel-Relaisventile, deren Betriebsstellung abhängig ist von den beiden Drücken an den beiden eingangsseitigen Anschlüssen, oder ein Wechselventil in vereinfachter Ausgestaltung, bei welcher eine Kugel, eine Membran oder ein anderweitiger Ventilkörper beidseitig von dem Druck an den beiden eingangsseitigen Anschlüssen beaufschlagt und zwischen zwei Betriebsstellungen bewegbar ist, in welchen jeweils ein Ventil zur Verbindung eines der eingangsseitigen Anschlüsse mit dem Ausgang geöffnet oder geschlossen ist. Durchaus möglich ist auch, dass zur Bildung des Wechselventils zwei separate Ventile Einsatz finden, wobei die beiden Ventile mechanisch miteinander gekoppelte Relaiskolben besitzen können, die jeweils mit den beiden Drücken an den eingangsseitigen Anschlüssen beaufschlagt werden.

Die Auslegung der Umschaltdrücke des Wechselventils kann beliebig sein. Für eine besondere Ausgestaltung der Erfindung ist bei dem Wechselventil der mit dem Kupplungskopf Bremse verbundene Anschluss priorisiert. Dies ist insbesondere vorteilhaft für den "normalen Fahrbetrieb", in welchem die Nutzung des Steuerdrucks von dem Kupplungskopf Bremse möglichst ohne Verluste in dem Wechselventil erfolgen soll. Durch die Priorisierung des Wechselventils kann vermieden werden, dass mit Druckbeaufschlagung des Kupplungskopfs Bremse zunächst eine Umschaltung des Wechselventils erfolgen muss. Vielmehr leitet das Wechselventil für den "normalen Fahrbetrieb" den von dem Kupplungskopf Bremse entstammenden Steuerdruck unmittelbar weiter, womit auch die zuvor genannte Schwellzeit reduziert werden kann.

Möglich ist, dass im Rahmen der vorliegenden Erfindung ein (weiteres) Wechselventil Einsatz findet, welches einen ersten Eingang besitzt, der mit einer Betriebsbremsleitung verbunden ist. Ein zweiter Eingang des Wechselventils ist mit einem Anschluss des Parkventils verbunden. Der Ausgang des Wechselventils gibt den Druck in einer Federspeicherbremsleitung vor. Ein derartiges Wechselventil kann genutzt werden, um an einem Kombi-Bremszylinder mit einer Betriebsbremse und einer Federspeicherbremse eine Bremskraftaddition zu vermeiden.

Durchaus möglich ist, dass die Entlüftung der Federspeicherbremse über das Parkventil erfolgt. In bevorzugter Ausgestaltung der Erfindung ist der Ausgang des zuvor genannten Wechselventils über ein Schnelllöseventil mit der Federspeicherbremsleitung verbunden. Auf diese Weise kann zunächst die Beaufschlagung des Wechselventils (und damit des Schnelllöseventils) über das Parkventil (und das Anhängerbremsventil) gesteuert werden. Hingegen kann die tatsächliche Entlüftung der Federspeicherkammer über das Schnelllöseventil erfolgen, womit eine Bereitstellung großer Entlüftungsquerschnitte und ein kurzer Entlüftungsweg gewährleistet werden können und damit ein besonders schnelles Ansprechen der Federspeicherbremse gewährleistet werden kann.

Ein besonderer Aspekt der Erfindung betrifft eine Gruppe von Ventileinrichtungen, wie diese beispielsweise von einem Unternehmen produziert und/oder vertrieben werden können. Für diesen Vorschlag der Erfindung enthält die Gruppe von Ventileinrichtungen eine erste Teilgruppe sowie eine zweite Teilgruppe von Ventileinrichtungen, welche unterschiedlich ausgebildet sind und für unterschiedliche Anhängertypen oder Ausstattung der Anhänger bestimmt sind. Die Ventileinrichtungen der ersten Teilgruppe sind wie zuvor erläutert ausgebildet, also insbesondere sowohl mit einem Notbremsventil als auch mit einem Federspeicherventil, welche in ein Anhängerbremsventil integriert sind. Hingegen sind die Ventileinrichtungen der zweiten Teilgruppe ohne Notbremsventil und/oder ohne Federspeicherventil ausgebildet, so dass die Ventileinrichtungen der zweiten Teilgruppe über einen reduzierten Funktionsumfang verfügen. Erfindungsgemäß ist das Gehäuse des Anhängerbremsventils der Ventileinrichtungen der zweiten Teilgruppe baugleich ausgebildet mit dem Gehäuse des Anhängerbremsventils der Ventileinrichtungen der ersten Teilgruppe, obwohl das Gehäuse des Anhängerbremsventils für die zweite Teilgruppe kein Notbremsventil und/oder kein Federspeicherventil beinhaltet, während dieses für die Ventileinrichtungen der ersten Teilgruppe sowohl das Notbremsventil als auch das Federspeicherventil beinhaltet. Durch Verwendung desselben Gehäuses des Anhängerbremsventils für die Ventileinrichtungen beider Teilgruppen kann die Bauteilvielfalt reduziert werden, wodurch letztendlich eine Reduzierung der Herstellungskosten und/oder Bevorratungskosten erfolgen kann. Möglich ist, dass für die Ventileinrichtungen der zweiten Teilbaugruppe besondere Maßnahmen an dem Gehäuse des Anhängerbremsventils vorgenommen werden. Beispielsweise können nicht genutzte Anschlüsse mit Verschlüssen oder Verschlusseinsätzen verschlossen sein. Ebenfalls möglich ist, dass funktionale Einsätze Aufnahme finden in Aufnahmeräumen, welche für die Ventileinrichtungen der ersten Teilgruppe zur Aufnahme des Notbremsventils und/oder des Federspeicherventils oder der zugeordneten Ventilelemente genutzt werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche und des Schutzbereiches verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher abhängiger Patentansprüche kombiniert werden. Ebenso können in den abhängigen Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Druckluftanlage eines Anhängers mit einer erfindungsgemäßen Ventileinrichtung in schematischer Darstellung, wobei hier ein Kupplungskopf Vorrat drucklos ist.
- **Fig. 2**: zeigt die Druckluftanlage gemäß Fig. 1 für druckbeaufschlagten Kupplungskopf Vorrat, wobei hier ein Umschaltdruck eines Federspeicherventils überschritten ist, während ein Umschaltdruck eines Notbremsventils nicht überschritten ist.
- **Fig. 3**: zeigt die Druckluftanlage gemäß Fig. 1 und 2 mit druckbeaufschlagtem Kupplungskopf Vorrat, wobei hier sowohl der Umschaltdruck des Federspeicherventils als auch der Umschaltdruck des Notbremsventils überschritten ist.
- **Fig. 4**: zeigt eine Druckluftanlage mit einer Ventileinrichtung, bei welcher der Umschaltdruck des Federspeicherventils höher ist als der Umschaltdruck des Notbremsventils, wobei in der dargestellten Betriebsstellung der Umschaltdruck des Notbremsventils überschritten ist, während ein Umschaltdruck des Federspeicherventils nicht überschritten ist.
- **Fig. 5**: zeigt eine Druckluftanlage mit einer alternativen erfindungsgemäßen Ventileinrichtung, bei welcher eine Steuerfläche eines Ventilschiebers von dem Druck in einem Behälter der Druckluftanlage beaufschlagt ist.
- **Fig. 6**: zeigt eine Druckluftanlage mit einer alternativen erfindungsgemäßen Ventileinrichtung, in welcher die Druckbeaufschlagung der Steuerfläche des Ventilschiebers über ein Magnetventil steuerbar ist.
- **Fig. 7**: zeigt eine Druckluftanlage mit einer alternativen erfindungsgemäßen Ventileinrichtung, in welcher ein Ventilschieber mit einem Differentialkolben Einsatz findet.
- **Fig. 8**: zeigt eine Druckluftanlage mit einer Ventileinrichtung, in welcher ein Anhängerbremsventil Einsatz findet, dessen Gehäuse grundsätzlich entsprechend Fig. 1 bis 7 ausgebildet ist, wobei in dem Gehäuse aber kein Notbremsventil in dem vorhandenen Aufnahmeraum vorhanden ist.
- **Fig. 9**: zeigt eine Druckluftanlage mit einer Ventileinrichtung, bei welcher ein Gehäuse des Anhängerbremsventils grundsätzlich entsprechend Fig. 1 bis 8 ausgebildet ist, wobei aber in einem Aufnahmeraum für das Federspeicherventil kein Federspeicherventil vorhanden ist.
- **Fig. 10**: zeigt eine Druckluftanlage, bei welcher ein Steuereingang einer EBS-Steuereinheit nicht mit einem Ausgang der Ventileinrichtung verbunden ist.
- **Fig. 11**: zeigt eine Druckluftanlage mit einer Ventileinrichtung, bei welcher ein Gehäuse eines Anhängerbremsventils Einsatz findet, welches grundsätzlich entsprechend den Fig. 1 bis 10 ausgebildet ist, wobei aber in dem Aufnahmeraum für das Federspeicherventil kein Federspeicherventil angeordnet ist, und bei welcher ein Parkventil gemäß DE 10 2007 053 765 A1 und DE 10 2007 053 764 A1 eingesetzt ist.
- **Fig. 12**: zeigt den Einsatz einer Ventileinrichtung, bei welcher ein Gehäuse eines Anhängerbremsventils Einsatz findet, welches grundsätzlich entsprechend den Fig. 1 bis 11 ausgebildet ist, wobei aber in dem Aufnahmeraum für das Federspeicherventil kein Federspeicherventil angeordnet ist, kein Parkventil vorhanden ist und keine Kombi-Bremszylinder verwendet werden.
- **Fig. 13**: zeigt eine Druckluftanlage mit einer erfindungsgemäßen Ventileinrichtung mit Funktionsschaltbildern der Ventile, wobei hier in das Anhängerbremsventil Überströmventile für Verbraucherkreise der Druckluftanlage integriert sind.
- **Fig. 14**: zeigt eine Druckluftanlage mit einer erfindungsgemäßen Ventileinrichtung mit Funktionsschaltbildern der Ventile und mit integriertem Überströmventil und mit einer weiteren integrierten Ventileinrichtung für eine Luftfederungsanlage.
- **Fig. 15**: zeigt stark schematisiert eine Druckluftanlage mit einer Ventileinrichtung, über welche auch eine Beaufschlagung von Luftfederbälgen und eines Liftbalgs erfolgt.
- **Fig. 16**: zeigt eine mögliche Ausgestaltung der Druckluftanlage und Ventileinrichtung gemäß Fig. 14 oder 15 mit Funktionsschaltbildern der einsetzbaren Ventile.

### FIGURENBESCHREIBUNG

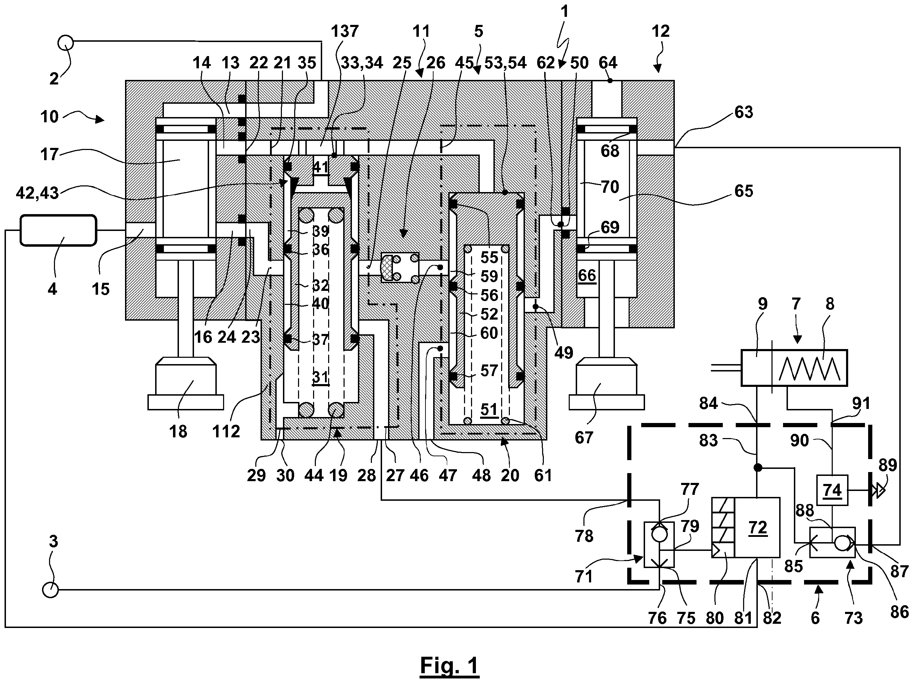

**Fig. 1** zeigt stark schematisiert eine Druckluftanlage 1 eines Anhängers eines Fahrzeugzugs bestehend aus einem Zugfahrzeug und dem Anhänger, insbesondere eines Nutzfahrzeug-Fahrzeugzugs. Eine pneumatische Kommunikation zwischen Zugfahrzeug und Anhänger erfolgt in bekannter Weise über einen Kupplungskopf Vorrat 2, über welchen die Druckluftanlage 1 mit Druckluft versorgt wird, sowie einen Kupplungskopf Bremse 3, über welchen die Druckluftanlage 1 mit einem Steuerdruck für eine Betriebsbremse versorgt wird, welcher insbesondere von dem Fahrer des Zugfahrzeugs über die Betätigung eines Bremspedals vorgegeben oder beeinflusst werden kann.

Die Druckluftanlage 1 verfügt über einen Behälter 4, eine Ventileinrichtung 5, eine weitere Ventileinrichtung 6 sowie Kombi-Bremszylinder 7 mit einer Federspeicherkammer 8 und einer Betriebsbremskammer 9, wobei in den Figuren zur Vereinfachung nur ein Kombi-Bremszylinder 7 dargestellt ist. Hierbei können einzelne Achsen auch lediglich mit Betriebsbremsen ohne Federspeicherbremsen ausgestattet sein.

Die Ventileinrichtung 5 ist mit einem Löseventil 10, einem Anhängerbremsventil 11 und einem Parkventil 12 gebildet. Für das dargestellte Ausführungsbeispiel sind das Löseventil 10, das Anhängerbremsventil 11 und das Parkventil 12 als Schieberventile ausgebildet, ohne dass dies zwingend der Fall ist.

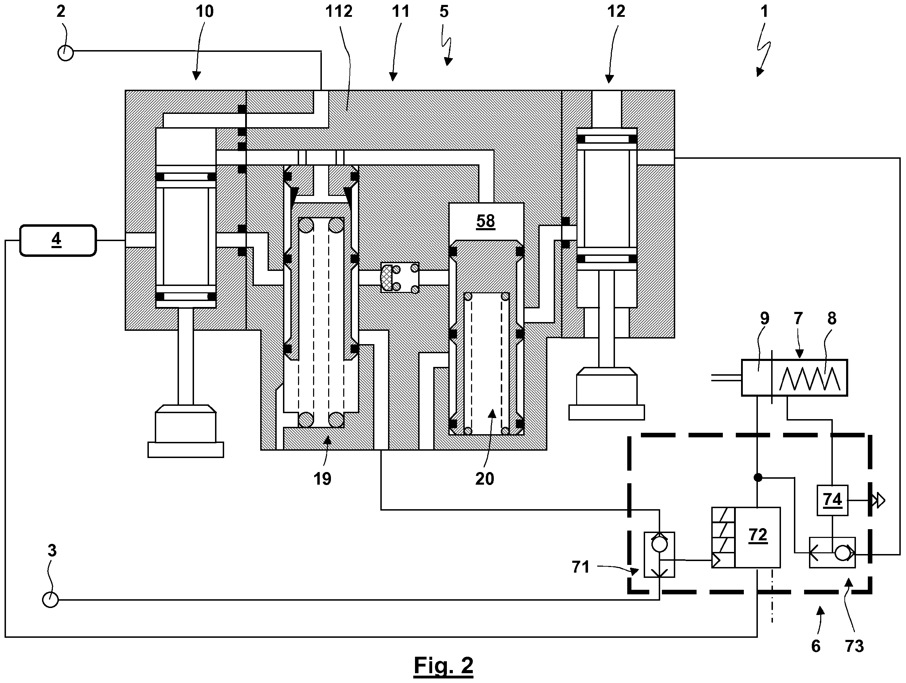

Das Löseventil 10 verfügt über einen mit dem Kupplungskopf Vorrat 2 verbundenen Anschluss 13. Während durchaus möglich ist, dass der Anschluss 13 unmittelbar mit dem Kupplungskopf Vorrat 2 verbunden ist, ist gemäß Fig. 1 die Verbindung zwischen dem Anschluss 13 und dem Kupplungskopf Vorrat 2 durch das Anhängerbremsventil 11 hindurchgeführt. Des Weiteren besitzt das Löseventil 10 einen Anschluss 14. Der Anschluss 14 wird für das Löseventil 10 in der Stellung Fahrt (vgl. Fig. 2) beaufschlagt mit dem Druck an dem Kupplungskopf Vorrat 2. Hingegen wird der Anschluss 14 in der in Fig. 1 wirksamen Lösestellung des Löseventils 10 mit dem Druck aus dem Behälter 4 beaufschlagt. Die an dem Anschluss 14 anstehende Druckluft wird als Steuerdruck in dem Anhängerbremsventil 11 genutzt und/oder über das Anhängerbremsventil 11 unter Rückführung durch das Löseventil 10 in der Stellung Fahrt des Löseventils 10 dem Behälter 4 zugeführt. Ein weiterer Anschluss 15 des Löseventils 10 ist unmittelbar mit dem Behälter 4 verbunden. Über einen Anschluss 16 ist der Anschluss 15 und damit der Behälter 4 unabhängig von der Stellung des Löseventils 10 mit dem Anhängerbremsventil 11 verbunden. Über den Anschluss 16 erfolgt einerseits eine Befüllung des Behälters 4 mit der von dem Kupplungskopf Vorrat 2 bereitgestellten Druckluft. Andererseits kann über den Anschluss 16 die Versorgung des Anhängerbremsventils 11 mit Druckluft aus dem Behälter 4 erfolgen. Ein Ventilschieber 17 befindet sich gemäß Fig. 1 in einer Lösestellung, in welcher der Anschluss 13 abgesperrt ist, während die Anschlüsse 14, 15, 16 miteinander verbunden sind. In der Stellung Fahrt, welche in **Fig. 2** dargestellt ist, erfolgt über das Löseventil 10 eine Verbindung der Anschlüsse 13, 14 einerseits und der Anschlüsse 15, 16 andererseits, während anderweitige Verbindungen der Anschlüsse 13-16 abgesperrt sind. Für drucklosen Anschluss 13 bzw. drucklosen Kupplungskopf Vorrat 2 ist das Löseventil 10 multistabil, so dass dieses je nach manueller Betätigung sowohl die Stellung Fahrt als auch die Lösestellung einnehmen kann und dann in dieser verbleibt. Über einen Betätigungsknopf 18 kann der Benutzer oder Fahrer manuell die Stellung des Löseventils 10 vorgeben. Erfolgt hingegen eine Druckluftbeaufschlagung des Kupplungskopfs Vorrat 2 bzw. des Anschlusses 13, wirkt der Druck auf eine Steuerfläche, hier eine Stirnfläche des Ventilschiebers 17, was die Überführung des Löseventils 10 aus der Lösestellung gemäß Fig. 1 in die Stellung Fahrt gemäß Fig. 2 zur Folge hat. Für das dargestellte Ausführungsbeispiel wird der Ventilschieber 17 zwischen den Stellungen translatorisch bewegt, wobei durchaus im Rahmen der Erfindung auch ein Löseventil 10 in Drehschieber-Bauweise Einsatz finden kann.

Das Anhängerbremsventil 11 verfügt über ein Notbremsventil 19 und ein Federspeicherventil 20. Das Notbremsventil 19 und das Federspeicherventil 20 können nicht manuell betätigt werden. Vielmehr werden diese jeweils mechanisch unabhängig voneinander pneumatisch in Abhängigkeit von mindestens einem Steuerdruck betätigt. In Fig. 1 sind das Notbremsventil 19 und das Federspeicherventil 20 schematisch mit der strichpunktierten Linie dargestellt. Diese Kennzeichnung ist in den folgenden Figuren zwecks Vereinfachung der Darstellung entfallen. Das Notbremsventil 19 und das Federspeicherventil 20 können in das Anhängerbremsventil 11 integrierte Baueinheiten mit einem eigenen Gehäuse sein oder ohne eigenes Gehäuse ausgebildet sind.

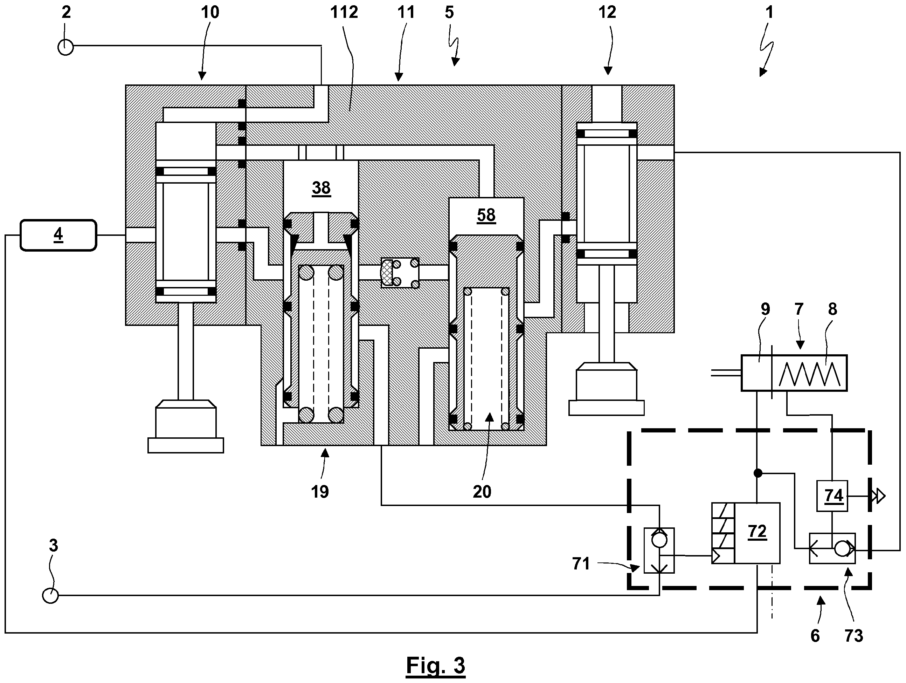

Das Notbremsventil 19 dient hierbei einer automatisierten Betätigung der Betriebsbremse mit einer Druckbeaufschlagung der Betriebsbremskammer 9 in einer Notbremsstellung (Umschaltdruck unterschritten, Fig. 1). Während diese Druckbeaufschlagung der Betriebsbremskammer 9 grundsätzlich auch unmittelbar erfolgen kann, erfolgt dies gemäß den dargestellten Ausführungsbeispielen unter Zwischenschaltung der weiteren Ventileinrichtung 6, insbesondere um eine modulierte EBS-Bremsung zu ermöglichen. Entsprechend kann über das Notbremsventil 19 auch automatisiert eine Betriebsbremskraft beseitigt werden (Umschaltdruck überschritten, Stellung Fahrt, Fig. 3).

Das Federspeicherventil 20 dient dem automatisierten Lösen (Umschaltdruck überschritten, Fig. 2) der Federspeicherbremse oder Aktivieren der Federspeicherbremse (Umschaltdruck unterschritten, Fig. 1) durch Beeinflussung der Druckverhältnisse in der Federspeicherkammer 8. Während dies grundsätzlich auch unmittelbar erfolgen kann, erfolgt dies gemäß Fig. 1 unter Zwischenschaltung des Parkventils 12 sowie der weiteren Ventileinrichtung 6, womit insbesondere ein ergänzendes manuelles Einwirken auf den Betriebszustand der Federspeicherbremse und die Vermeidung einer Bremskraftaddition an dem Kombi-Bremszylinder 7 ermöglicht werden soll.

Das Notbremsventil 19 besitzt einen Anschluss 21 für einen Steuerdruck. Gemäß Fig. 1 ist der Anschluss 21 über einen Anschluss 22 des Anhängerbremsventils 11 mit dem Anschluss 14 des Löseventils 10 verbunden. Des Weiteren verfügt das Notbremsventil 19 über einen Anschluss 23, welcher mit dem Behälter 4 verbunden ist, was gemäß Fig. 1 über einen Anschluss 24 des Anhängerbremsventils 11 erfolgt, der mit dem Anschluss 16 des Löseventils 10 verbunden ist. Ein weiterer Anschluss 25 des Notbremsventils 19 ist unter Zwischenschaltung eines Rückschlagventils 26 mit einem Anschluss 46 des Federspeicherventils 20 verbunden. Ein Anschluss 27 des Notbremsventils 19 ist über einen Anschluss 28 des Anhängerbremsventils 11 mit der weiteren Ventileinrichtung 6 verbunden. Schließlich ist ein Anschluss 29 des Notbremsventils 19 mit einer Entlüftung 30 des Anhängerbremsventils 11 verbunden.

Das Notbremsventil 19 verfügt über einen Aufnahmeraum 31, welcher mit den Anschlüssen 21, 23, 25, 27 und 29 verbunden ist. In dem Aufnahmeraum 31 ist ein Ventilschieber 32 verschieblich geführt. Der Ventilschieber 32 verfügt über eine Steuerfläche 33, welche hier von der Stirnfläche 34 des Ventilschiebers 32 ausgebildet ist, ohne dass dies zwingend der Fall sein muss. Der Ventilschieber 32 besitzt benachbart der Steuerfläche 33 eine Dichtkante 35, die mit einem Dichtring gebildet ist. Des Weiteren besitzt der Ventilschieber 32 Steuerkanten 36, 37, welche ebenfalls mit einem Dichtring gebildet sind. Die Dichtkante 35 und die Steuerkanten 36, 37 sind unter Abdichtung in dem Aufnahmeraum 31 geführt. Die Dichtkante 35, die Steuerfläche 33 und der Aufnahmeraum 31 begrenzen eine Steuerkammer 38 (vgl. Fig. 3), welche über den Anschuss 21 mit einem Steuerdruck beaufschlagt wird. Ein Ringraum 39 wird axial begrenzt durch die Dichtkante 35 und die Steuerkante 36 sowie radial begrenzt durch die Wandung des Aufnahmeraums 31 und den Ventilschieber 32. Ein weiterer Ringraum 40 ist axial begrenzt durch die Steuerkanten 36, 37 sowie radial begrenzt durch den Ventilschieber 32 und die Wandung des Aufnahmeraums 31. Die Steuerkammer 38 ist über einen sich durch das Innere des Ventilschiebers 32 erstreckenden Kanal 41 mit dem Ringraum 39 verbunden. Diese Verbindung erfolgt unter Zwischenschaltung eines in Richtung des Ringraums 39 öffnenden Rückschlagventils 42, welches für das dargestellte Ausführungsbeispiel als Dichtlippe 43 ausgebildet ist. Durchaus möglich ist aber, dass ein Rückschlagventil 42 in anderweitiger konstruktiver Ausgestaltung Einsatz findet. Auf der der Steuerfläche 33 gegenüberliegenden Seite ist der Ventilschieber 32 über eine vorgespannte Druckfeder 44 an einem Boden des Aufnahmeraums 31 abgestützt, so dass unterhalb eines Umschaltdrucks des Notbremsventils 19 das Volumen der Steuerkammer 38 minimiert ist und das Notbremsventil 19 die in Fig. 1 dargestellte Notbremsstellung einnimmt. Hierbei ist der Umschaltdruck des Notbremsventils 19 abhängig von der Vorspannung der Druckfeder 44 und der Fläche der Steuerfläche 33, welche mit dem Steuerdruck in der Steuerkammer 38 beaufschlagt wird.

In der in Fig. 1 wirksamen Notbremsstellung des Notbremsventils 19 ist der Ringraum 39 zwar über das Rückschlagventil 42 mit dem Anschluss 21 verbunden. Eine anderweitige Verbindung des Ringraums 39 mit Anschlüssen des Notbremsventils 19 erfolgt aber nicht, insbesondere in Folge der Absperrung durch die Steuerkante 36. Der Ringraum 40 verbindet den Anschluss 23, also letztendlich den Behälter 4, mit dem Anschluss 25 sowie dem Anschluss 27, womit eine Belüftung des Anschlusses 27 erfolgen kann.

In alternativer, in den Figuren nicht dargestellter Ausführungsform ist es auch möglich, dass das Rückschlagventil 42 an einer anderen Stelle zwischen den Anschlüssen 14, 16 oder zwischen den Anschlüssen 21, 24 angeordnet ist, wobei u. U. die Stelle auch so gewählt sein kann, dass die Leitungsverbindung an dem Notbremsventil 19 vorbeigeführt sein kann und/oder eine Befüllung des Behälters 4 unabhängig von der Betriebsstellung des Notbremsventils 19 möglich ist.

Übersteigt der Steuerdruck in der Steuerkammer 38 den Umschaltdruck des Notbremsventils 19, nimmt dieses die Stellung Fahrt gemäß Fig. 3 ein. Hierbei überfährt die Steuerkante 36 die den Anschlüssen 23, 25 zugeordnete Querbohrung. In der Stellung Fahrt verbindet somit der Ringraum 39 die Anschlüsse 23, 25 miteinander. Hingegen erfolgt über die Steuerkante 36 in der Stellung Fahrt eine Trennung des Anschlusses 27 von dem Anschluss 23, also letztendlich von dem Behälter 4. Da die Steuerkante 37 eine dem Anschluss 30 zugeordnete Bohrung überfährt, ist in der Stellung Fahrt des Notbremsventils 19 der Anschluss 27 mit dem Anschluss 29 verbunden, womit eine Entlüftung des Anschlusses 27 erfolgen kann.

Das Federspeicherventil 20 verfügt über einen Anschluss 45 für einen Steuerdruck, welcher mit dem Anschluss 22 des Anhängerbremsventils 11 verbunden ist (was gemäß Fig. 1 unter Hindurchführung durch das Notbremsventil 19 erfolgt, ohne dass dies zwingend der Fall ist). Darüber hinaus besitzt das Federspeicherventil 20 einen Anschluss 46, welcher über das Rückschlagventil 26 mit dem Anschluss 25 des Notbremsventils 19 verbunden ist, sowie einen Anschluss 47, welcher mit einer Entlüftung 48 des Anhängerbremsventils 11 verbunden ist, wobei es sich auch um eine gemeinsame Entlüftung 30 für das Notbremsventil 19 und das Federspeicherventil 20 handeln kann. Weiterhin besitzt das Federspeicherventil 20 einen Anschluss 49, welcher mit einem Anschluss 50 des Anhängerbremsventils 11 verbunden ist, welcher wiederum mit einem Anschluss 62 des Parkventils 12 verbunden ist. Das Federspeicherventil 20 weist einen Aufnahmeraum 51 auf, in welchem ein Ventilschieber 52 verschieblich geführt ist. Der Ventilschieber 52 verfügt über eine Steuerfläche 53, welche hier als Stirnfläche 54 ausgebildet ist, ohne dass dieses zwingend der Fall sein muss. Der Druck des Kupplungskopfs Vorrat 2 wird gemäß Fig. 1 über eine Verzweigung 137 den beiden Steuerleitungszweigen zugeführt, welche die Steuerflächen 33, 53 der Ventilschieber 32, 52 beaufschlagen. Der Ventilschieber 52 bildet, insbesondere mit einem Dichtring, eine Dichtkante 55 sowie eine Steuerkante 56 und eine weitere Dichtkante 57 aus. Eine Steuerkammer 58, welche über den Anschluss 45 mit einem Steuerdruck beaufschlagt ist, ist begrenzt durch die Steuerfläche 53, die Dichtkante 55 und die Wandung des Aufnahmeraums 51. Ein Ringraum 59 ist axial begrenzt durch die Dichtkante 55 und die Steuerkante 56 sowie radial begrenzt durch die den Aufnahmeraum 51 begrenzende Wandung und den Ventilschieber 52. Ein Ringraum 60 ist axial begrenzt durch die Steuerkante 56 sowie die Dichtkante 57 sowie radial begrenzt durch die den Aufnahmeraum 51 begrenzende Wandung und den Ventilschieber 52. Auf der der Steuerfläche 53 gegenüberliegenden Seite ist der Ventilschieber 52 über eine vorgespannte Druckfeder 61 an einem Boden des Aufnahmeraums 51 abgestützt, so dass für einen Steuerdruck in der Steuerkammer unterhalb eines Umschaltdrucks des Federspeicherventils 20 das Federspeicherventil 20 eine Entlüftungsstellung einnimmt, in welcher das Volumen der Steuerkammer 58 minimal ist (vgl. Fig. 1). Überschreitet hingegen der Steuerdruck in der Steuerkammer 58 den Umschaltdruck, wird das Federspeicherventil 19 aus der Entlüftungsstellung gemäß Fig. 1 in eine Belüftungsstellung gemäß Fig. 2 überführt. Der Umschaltdruck ist konstruktiv vorgegeben durch die Vorspannung und Federsteifigkeit der Druckfeder 61 und die Fläche der Steuerfläche 53. In der Entlüftungsstellung verbindet das Federspeicherventil 20 die Anschlüsse 47, 49 über den Ringraum 60, womit eine Entlüftung des Anschlusses 49 erfolgt. Hingegen sperrt die Steuerkante 56 eine Verbindung der Anschlüsse 47, 49 mit dem Anschluss 46. Mit der Bewegung des Federspeicherventils 20 von der Entlüftungsstellung in die Belüftungsstellung mit Überschreiten des Umschaltdrucks überfährt die Steuerkante 56 eine dem Anschluss 49 zugeordnete Querbohrung, womit die Steuerkante 56 dann eine Verbindung der Anschlüsse 47, 49 absperrt. Stattdessen erfolgt über den Ringraum 59 in der Belüftungsstellung eine Verbindung der Anschlüsse 46, 49 miteinander, womit letztendlich (bei hinreichendem Druckunterschied zur Öffnung des Rückschlagventils 26) eine Verbindung des Anschlusses 49 mit dem Behälter 4 erfolgt, was unabhängig von der Stellung des Notbremsventils 19 der Fall ist.

Das Parkventil 12 ist für das Ausführungsbeispiel gemäß Fig. 1 in an sich bekannter Weise als manuell betätigbares 3/2-Wegeventil ausgebildet. Dieses verfügt über einen Anschluss 62, über welchen das Parkventil mit dem Anschluss 50 des Anhängerbremsventils 11 verbunden ist. Befindet sich das Federspeicherventil 20 in der Belüftungsstellung, erfolgt eine Belüftung des Anschlusses 62 des Parkventils 12 aus dem Behälter. Befindet sich hingegen das Federspeicherventil 20 in seiner Entlüftungsstellung, erfolgt eine Entlüftung des Anschlusses 62 des Parkventils. Das Parkventil 12 verfügt auch über einen Anschluss 63, welcher (hier unter Zwischenschaltung der weiteren Ventileinrichtung 6) mit der Federspeicherkammer 8 verbunden ist. Das Parkventil 12 besitzt auch einen Anschluss 64 für eine Entlüftung. Das Parkventil 12 ist mit einem Ventilschieber 65 ausgebildet, der in einem Aufnahmeraum 66 verschieblich ist, zwei metastabile Stellungen einnehmen kann und von dem Benutzer über einen Betätigungsknopf 67 willkürlich in die beiden Stellungen bewegt werden kann, wo dieses dann verbleibt. Der Ventilschieber 65 verfügt über eine Steuerkante 68 sowie eine Dichtkante 69. Ein Ringraum 70 ist axial begrenzt durch die Steuerkante 68 und die Dichtkante 69 sowie radial begrenzt durch eine den Aufnahmeraum 66 begrenzende Wandung sowie den Ventilschieber 65. In der in Fig. 1 wirksamen Stellung Fahrt verbindet der Ringraum 70 die Anschlüsse 62, 63 miteinander, während die Entlüftung 64 über die Steuerkante 68 abgesperrt ist. Wird hingegen manuell das Parkventil 12 aus der Stellung Fahrt gemäß Fig. 1 überführt in eine Stellung Parken, überfährt die Steuerkante eine dem Anschluss 63 zugeordnete Querbohrung, womit die Steuerkante 68 eine Verbindung der Anschlüsse 62, 63 absperrt und eine Verbindung des Anschlusses 64 mit dem Anschluss 63 freigibt, womit eine Entlüftung des Anschlusses 63 erfolgt.

Die weitere Ventileinrichtung 6 verfügt über ein Wechselventil 71, eine Steuereinheit 72, bei welcher es sich vorzugsweise um eine ABS- oder EBS-Steuereinheit handelt, ein weiteres Wechselventil 73 und ein Schnellentlüftungsventil 74.

Das Wechselventil 71 besitzt einen Eingang 75, welcher über einen Anschluss 76 der weiteren Ventileinrichtung 6 unmittelbar ohne Zwischenschaltung weiterer Ventilelemente und/oder ohne Zwischenschaltung des Anhängerbremsventils 11, des Federspeicherventils 20 und des Notbremsventils 19 mit dem Kupplungskopf 3 verbunden ist. Ein weiterer Eingang 77 des Wechselventils 71 ist über einen Anschluss 78 der weiteren Ventileinrichtung 6 unmittelbar ohne Zwischenschaltung weiterer Ventilelemente verbunden mit dem Anschluss 28 des Anhängerbremsventils 11. Ein Ausgang 79 des Wechselventils 71 ist unmittelbar verbunden mit einem pneumatischen Steueranschluss 80 der Steuereinheit 72. Die Steuereinheit 72 wird über einen Anschluss 81 der Steuereinheit 72 und einen Anschluss 82 der weiteren Ventileinrichtung 6 aus dem Behälter 4, insbesondere unmittelbar ohne Zwischenschaltung weiterer Ventilelemente, mit Druckluft versorgt. Ausgangsseitig ist die Steuereinheit 72 über eine Betriebsbremssteuerleitung 83 mit einem Anschluss 84 der weiteren Ventileinrichtung 6 mit der Betriebsbremskammer 9 verbunden.

Das Wechselventil 73 verfügt über einen Eingang 85, welcher mit der Betriebsbremssteuerleitung 83 verbunden ist, sowie einen Eingang 86, welcher über einen Anschluss 87 der weiteren Ventileinrichtung 6 mit dem Anschluss 63 des Parkventils 12 verbunden ist. Ein Ausgang 88 des Wechselventils 73 ist über das Schnelllöseventil 74, welches eine zugeordnete Entlüftung 89 besitzt, mit einer Federspeicherbremsleitung 90 verbunden, welche über einen Anschluss 91 der weiteren Ventileinrichtung 6 zu der Federspeicherkammer 8 führt.

Die Zusammenfassung der einzelnen Ventile und Bauelemente zu Baueinheiten ist in Fig. 1 lediglich beispielhaft gewählt. Durchaus möglich ist, dass hier in eine Baueinheit integrierte Ventile und Bauelemente für alternative Ausgestaltungen separat ausgebildet sind und beispielsweise lediglich über pneumatische Verbindungen miteinander verbunden sind. Entsprechend ist auch möglich, dass in Fig. 1 separat dargestellte Baueinheiten zu einer Baueinheit zusammengefasst sind. Um lediglich ein nicht beschränkendes Beispiel zu nennen, ist es durchaus möglich, dass für eine erfindungsgemäße Ventileinrichtung das Löseventil 10, das Anhängerbremsventil 11 und das Parkventil 12 nicht wie dargestellt aneinander angeflanscht sind, sondern vielmehr als singuläre Bauelemente ausgebildet sind, welche über pneumatische Verbindungsleitungen miteinander verbunden sind. Weiterhin sind für das erläuterte Ausführungsbeispiel das Notbremsventil 19 und das Federspeicherventil 20 als integrale Bestandteile einer Baueinheit in Form des Anhängerbremsventils 11 ausgebildet. Alternativ oder zusätzlich zu den zuvor erläuterten Modifikationen ist es durchaus möglich, dass das Notbremsventil 19 und/oder das Federspeicherventil 20 als singuläre Bauelemente ausgebildet sind, wobei auch möglich ist, dass lediglich das Notbremsventil 19 in ein Anhängerbremsventil 11 integriert ist, während das Federspeicherventil 20 separat von dem Anhängerbremsventil 11 ausgebildet ist.

Die Funktionsweise der Druckluftanlage 1 gemäß Fig. 1 bis 3 ist wie folgt:

Für abgestellten Anhänger und entleerten Behälter 4 befindet sich die Ventileinrichtung 5 in dem in Fig. 1 dargestellten Betriebszustand. In diesem Betriebszustand sind angesichts des leeren Behälters 4 und mangels Druckbeaufschlagung des Kupplungskopfs Bremse 3 die Eingänge 76, 77 des Wechselventils 71 nicht druckbeaufschlagt, so dass der Steueranschluss 80 ebenfalls nicht druckbeaufschlagt ist. Damit wird in diesem Betriebszustand keine Bremswirkung über die Betriebsbremskammer 9 erzeugt. Über das Federspeicherventil 20 in der Entlüftungsstellung und das Parkventil 12 wie dargestellt in der Stellung Fahrt ist auch der Anschluss 63 entlüftet, was zur Folge hat, dass die Federspeicherbremskammer 8 entlüftet ist und die Federspeicherbremse wirksam ist. Der Anhänger ist somit für leeren Behälter 4 über die Federspeicherbremse gebremst.

Für drucklose Kupplungsköpfe 2, 3, aber hinreichend druckbeaufschlagten Behälter 4 führt hingegen der dem Behälter 4 entstammende Steuerdruck für das Notbremsventil 19 und das Federspeicherventil 20 zur Umschaltung des Notbremsventils 19 in die Entlüftungsstellung und des Federspeicherventils 20 in die Belüftungsstellung (Fig. 3). Dies hat zur Folge, dass der Steueranschluss 80 der Steuereinheit 72 drucklos ist, womit die Betriebsbremskammer 9 entlüftet ist, also keine Betriebsbremskraft erzeugt wird. Gleichzeitig erfolgt für das Parkventil 12 in der Stellung Fahrt die Druckbeaufschlagung der Federspeicherkammer 8, so dass die Federspeicherbremse gelöst ist. Damit ist der Anhänger rangierfähig. Soll hingegen der Anhänger gebremst werden, kann dies über die manuelle Überführung des Parkventils 12 von der Stellung Fahrt in die Stellung Parken durch den Benutzer bewerkstelligt werden.

Mit Anschluss der Kupplungsköpfe 2, 3 führt die Druckbeaufschlagung der Steuerfläche des Ventilschiebers 17 dazu, dass das Löseventil aus der Lösestellung gemäß Fig. 1 überführt wird in die Stellung Fahrt. Damit werden die Steuerflächen 33, 53 der Ventilschieber 32, 52 mit dem Druck an dem Kupplungskopf Vorrat 2 beaufschlagt. Für das dargestellte Ausführungsbeispiel ist ein Befüllen des Behälters 4 von dem Kupplungskopf Vorrat 2 nicht möglich, solange der Umschaltdruck des Notbremsventils 19 nicht erreicht ist. Ist der Umschaltdruck des Federspeicherventils 20 kleiner gewählt als der des Notbremsventils 19, schaltet das Federspeicherventil 20 zuerst um, wie dies in Fig. 2 dargestellt ist. Diese Umschaltung bewirkt, dass die Federspeicherbremse nicht wie gemäß Fig. 1 über das Federspeicherventil 20 entlüftet wird, sondern vielmehr über das Federspeicherventil 20 eine Verbindung zwischen der Federspeicherkammer 8 und dem Behälter 4 geschaffen wird. Somit wird (für ausreichendem Druck in dem Behälter 4) die Federspeicherbremse gelöst. Andererseits wird der Druck aus dem Behälter 4 über das Notbremsventil 19 in der Notbremsstellung dem Steueranschluss 80 zugeführt, womit dann eine Bremskraft an der Betriebsbremse erzeugt wird. Mit weiterem Anstieg des Drucks an dem Kupplungskopf Vorrat 2 erfolgt dann auch die Umschaltung des Notbremsventils 19, welche zur Folge hat, dass der Eingang 77 des Wechselventils 71 entlüftet wird. Ohne einen Bremssteuerdruck an dem Kupplungskopf Bremse 3 ist die Betriebsbremse nun entlüftet, da beide Eingänge 76, 77 entlüftet sind, was die Entlüftung des Steueranschlusses 80 zur Folge hat. Liegt hingegen ein Bremssteuerdruck an dem Kupplungskopf Bremse 3 vor, so kann das Wechselventil 71 diesen Bremssteuerdruck an den Steueranschluss 80 der Steuereinheit 72 weitergeben, so dass je nach Druck an dem Kupplungskopf Bremse 3 eine Betriebsbremskraft erzeugt wird oder nicht. Mit der Umschaltung sowohl des Federspeicherventils 20 als auch der späteren Umschaltung des Notbremsventils 19 ist der Anhänger somit fahrbereit (Fig. 3). Ein Befüllung des Behälters 4 über den Kupplungskopf Vorrat 2 ist erst nach der Überführung des Notbremsventils 19 von der Notbremsstellung in die Stellung Fahrt möglich.

Kommt es während des Fahrbetriebs zu einer Notbremssituation, insbesondere mit einem Abriss des Kupplungskopfs Vorrat 2, hat dies zur Folge, dass über den Kupplungskopf Vorrat 2 die Steuerkammern 38, 58 entlüftet werden, so dass das Federspeicherventil 20 und das Notbremsventil 19 in die Betriebsstellungen gemäß Fig. 1 überführt werden. Dies hat die Entlüftung der Federspeicherkammer 8 über das Parkventil 12 und das Federspeicherventil 20 zu der Entlüftung 48 zur Folge. Gleichzeitig erfolgt aber über das Notbremsventil 19 die Belüftung des Eingangs 77 des Wechselventils 71 und damit des Steuereingangs 80 aus dem Behälter 4, womit auch eine modulierte Notbremsung über die Betriebsbremse möglich ist, sofern der Druck in dem Behälter 4 ausreichend ist. Hierbei vermeidet das Wechselventil 73 eine Bremskraftaddition in dem Kombi-Bremszylinder. Mit zunehmendem Abfall des Drucks in dem Behälter 4 wird die Erzeugung der (Not-)Bremskraft zunehmend von der Betriebsbremse auf die Federspeicherbremse übergeben.

Ein Aspekt der Erfindung besteht darin, dass mittels der erfindungsgemäßen Ventileinrichtung zwei unterschiedliche Möglichkeiten geschaffen sind, den Eingang 68 des Wechselventils 73 und letztendlich auch die Federspeicherkammer 8 zu entlüften:
- Dies kann erfolgen, indem das Parkventil 12 in die Parkstellung überführt wird. In der Parkstellung des Löseventils 12 erfolgt die Entlüftung unabhängig von anderen pneumatischen Drücken allein auf Grundlage der Betriebsstellung des Parkventils 12. Unbenommen ist hierbei allerdings, dass zur Vermeidung einer Kräfteaddition eine Belüftung der Federspeicherkammer 8 über das Wechselventil 73 (entsprechend dem Druck in der Betriebsbremssteuerleitung) erfolgt.
- Hingegen ist die zweite Möglichkeit der Entlüftung gegeben, wenn sich das Parkventil 12 in der Stellung Fahrt befindet. In diesem Fall ist die Herbeiführung einer Entlüftung abhängig von der Stellung des Federspeicherventils 20 - befindet sich dieses in der Entlüftungsstellung, erfolgt zwingend eine Entlüftung. Befindet sich dieses hingegen in der belüfteten Stellung, erfolgt die Beaufschlagung des Eingangs 86 mit dem Druck des Behälters 4.

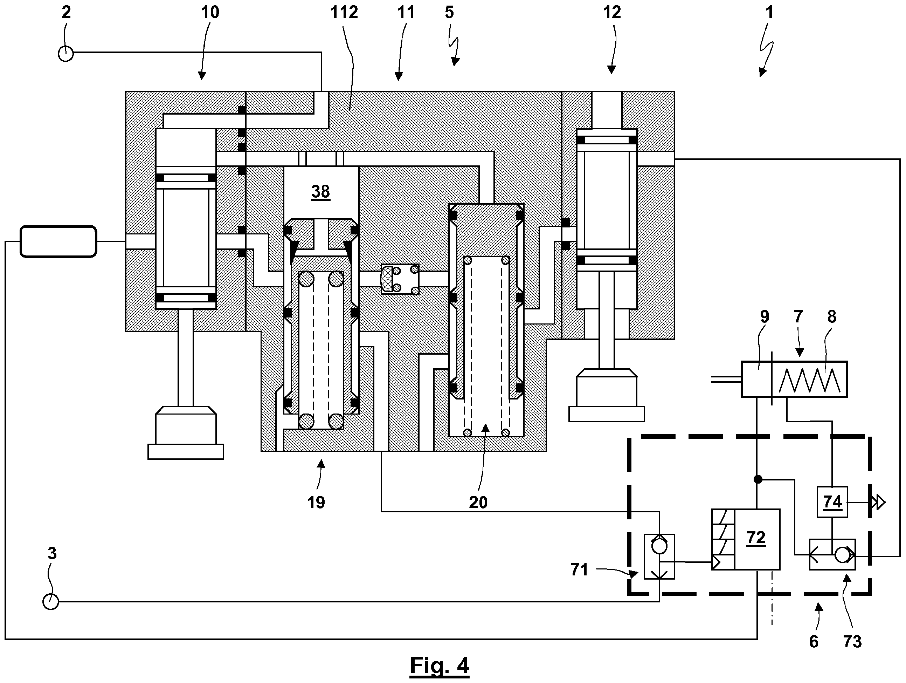

**Fig. 4** zeigt eine Ausführungsform der Druckluftanlage 1 sowie der Ventileinrichtung 5, bei welcher (bei ansonsten Fig. 1 bis 3 entsprechende Ausgestaltung) der Umschaltdruck des Notbremsventils 19 niedriger ist als der des Federspeicherventils 20.

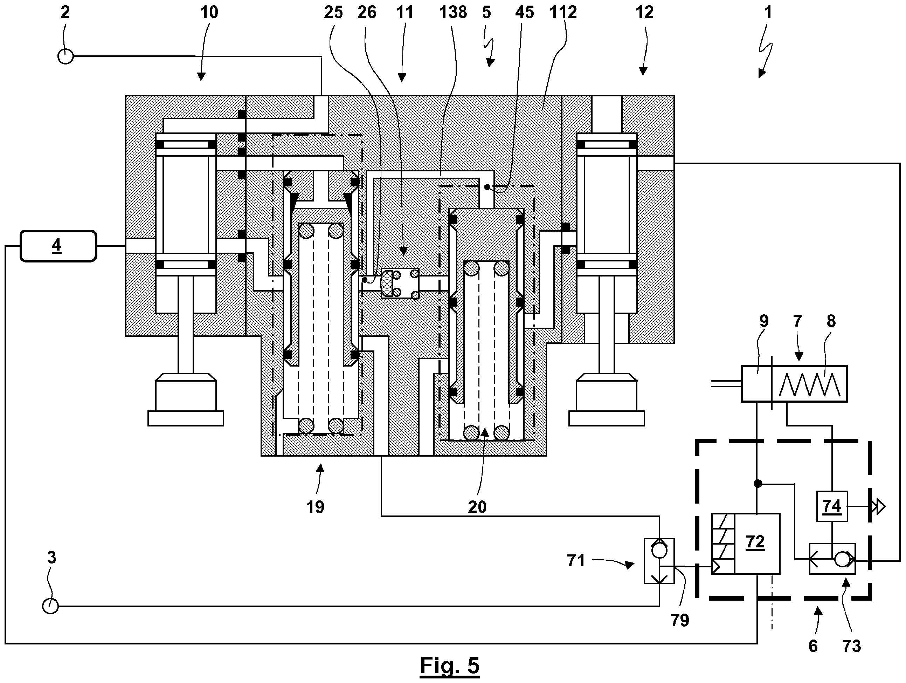

Gemäß dem in **Fig. 5** dargestellten Ausführungsbeispiel ist der Anschluss 45 zur Zuführung des Steuerdrucks zu dem Federspeicherventil 20 nicht (unmittelbar) mit dem Anschluss 14 bzw. 22 verbunden. Vielmehr ist hier der Anschluss 45 des Federspeicherventils 20 unter Umgehung des Rückschlagventils 26 über eine Steuerleitung 138 mit dem Anschluss 25 des Notbremsventils 19 verbunden, was zur Folge hat, dass an dem Federspeicherventil 20 in jedem Fall als Steuerdruck der Druck des Behälters 4 anliegt. Für entleerten Behälter 4 kann überhaupt erst eine Erzeugung eines Steuerdrucks für das Federspeicherventil 20 (und damit eine Umschaltung desselben) erfolgen, wenn eine Umschaltung des Notbremsventils 19 von der in Fig. 5 dargestellten Notbremsstellung in die Stellung Fahrt erfolgt ist: Erst dann erfolgt über das Rückschlagventil 42 die Befüllung des Behälters 4 und gleichzeitig die Erhöhung des Steuerdrucks in der Steuerkammer 58 des Federspeicherventils 20, wobei dann für hinreichende Befüllung des Behälters 4 die Umschaltung des Federspeicherventils 20 erfolgt. Damit erfolgt für (hinreichend) entleerten Behälter 4 in jedem Fall die Umschaltung des Notbremsventils 19 vor dem Umschalten des Federspeicherventils 20.

In Fig. 5 ist darüber hinaus beispielhaft dargestellt, wie abweichend zu den Ausführungsbeispielen gemäß Fig. 1 bis 4 ein einzelnes pneumatisches Element oder Ventil nicht integriert in eine Ventileinrichtung ausgeführt sein kann, sondern vielmehr als singuläres Bauelement. Hierbei handelt es sich in Fig. 5 um das Wechselventil 71, welches abweichend zu Fig. 1 bis 4 außerhalb der weiteren Ventileinrichtung 6 angeordnet ist und mit dieser über eine dem Ausgang 79 des Wechselventils 71 zugeordnete Leitung mit zugeordnetem Anschluss der Ventileinrichtung 6 kommuniziert.

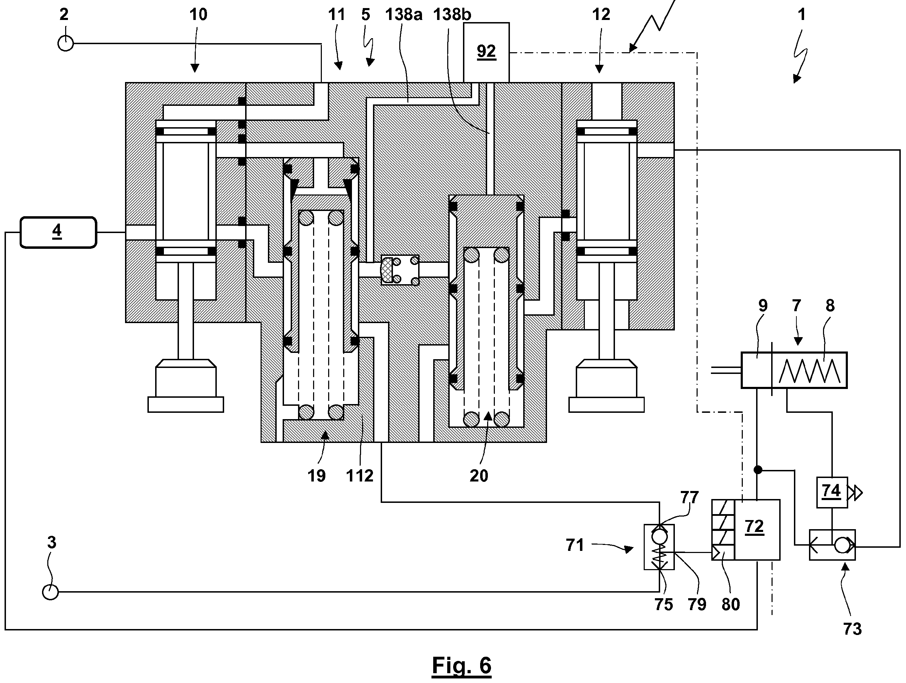

Gemäß dem Ausführungsbeispiel, welches in **Fig. 6** dargestellt ist, sind die Anschlüsse 25, 45 nicht unmittelbar über die Steuerleitung 138 miteinander verbunden. Vielmehr ist zwischen Steuerleitungszweige 138a, 138b ein Magnetventil 92 zwischengeschaltet, über welche zusätzlich zu dem an dem Anschluss 25 anliegenden Druck des Behälters 4, welcher als Steuerdruck auf das Federspeicherventil 20 einwirkt, eine Beeinflussung der Betriebsstellung des Federspeicherventils 20 möglicht ist. Während beliebige Ausgestaltungen des Magnetventils 92 möglich sind, ist im einfachsten Fall das Magnetventil als 2/2-Wege-Ventil ausgebildet mit einer Sperrstellung sowie einer Durchlassstellung. Eine Ansteuerung des Magnetventils 92 erfolgt durch eine elektronische Steuereinheit. Vorzugsweise handelt es sich hierbei um die Steuereinheit 72, so dass diese multifunktional ausgebildet ist, indem diese zusätzlich auch für die Ansteuerung des Magnetventils 92 und damit die Ansteuerung des Federspeicherventils 20 zuständig ist. Beispielsweise kann bei abgekuppelten Zustand das Magnetventil 92 in die Durchlassstellung geschaltet sein, so dass bei einem Druckabfall in dem Behälter 4 mit Unterschreiten des Umschaltdrucks des Federspeicherventils 20 dieses automatisiert in die Entlüftungsstellung überführt werden kann, womit das selbstständige Betätigen der Federspeicherbremse erfolgen kann. Hingegen kann grundsätzlich während der Fahrt des Anhängers das Magnetventil 92 in seine Sperrstellung überführt sein, was vorzugsweise der Fall ist, wenn keine elektrische Spannung anliegt. Kommt es dann insbesondere bei einer intensiven ABS-Bremsung zu einem Abfall des Drucks in dem Behälter 4, führt dieser Druckabfall nicht zu einem unerwünschten Umschalten des Federspeicherventils 20, welches einen unerwünschten Einfall der Federspeicherbremse zur Folge hätte.

Weiterhin ist gemäß Fig. 6 das Wechselventil 71 nicht mit gleichberechtigten Anschlüssen 75, 77 ausgestattet. Vielmehr ist hier der Anschluss 75 priorisiert, indem beispielsweise der Ventilkörper des Wechselventils 71 über eine Feder in Schließrichtung des Anschlusses 77 beaufschlagt ist. Damit hat der vom Kupplungskopf Bremse 3 bereitgestellte Bremssteuerdruck Vorrang gegenüber dem von dem Anschluss 28 des Anhängerbremsventils 11 bereitgestellten Druck. Hierdurch kann die Schwellzeit für die Zuführung des Drucks von dem Kupplungskopf Bremse 3 zu dem Steueranschluss 80 reduziert werden.

Für das Ausführungsbeispiel gemäß Fig. 6 ist das Magnetventil 92 von außen an ein Gehäuse des Anhängerbremsventils 11 angeflanscht oder hieran befestigt. Durchaus möglich ist auch, dass das Magnetventil 92 separat von dem Anhängerbremsventil 11 ausgebildet ist oder dass das Magnetventil 92 in das Anhängerbremsventil 11 integriert ist. Das Magnetventil 92 ist vorzugsweise stromlos geschlossen.

Darüber hinaus sind gemäß Fig. 6 die Bauelemente, die für die vorangegangenen Ausführungsbeispiele in die Ventileinrichtung 6 integriert waren, als singuläre Bauelemente ausgebildet.

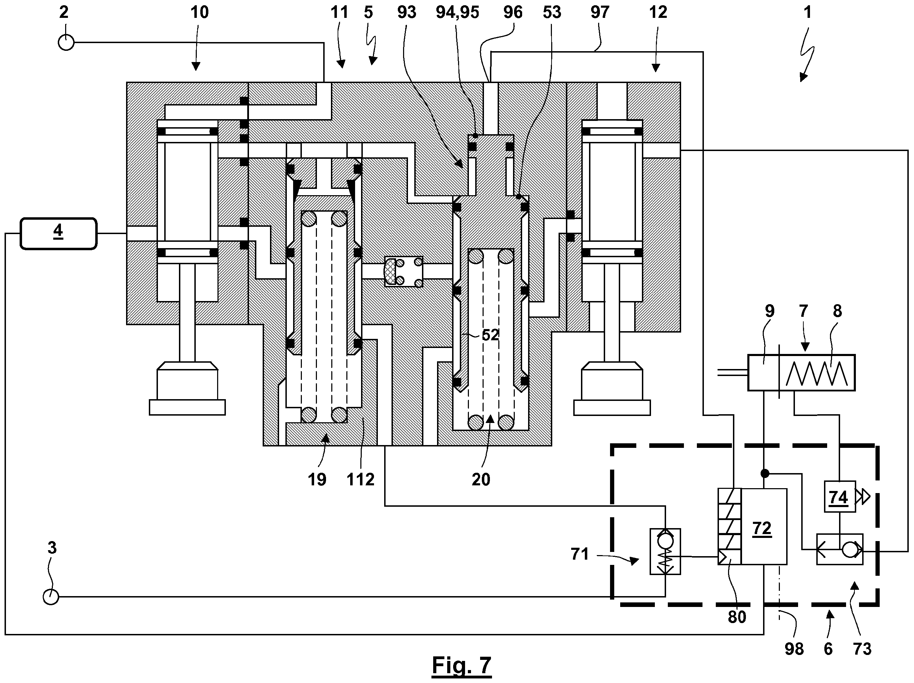

Für das in **Fig. 7** dargestellte Ausführungsbeispiel ist, bei ansonsten im Wesentlichen Fig. 1 entsprechender Ausgestaltung, der Ventilschieber 52 mit einem Differentialkolben 93 ausgebildet, so dass dieser zusätzlich zu der Steuerfläche 53, welche über den Anschluss 45 mit einem Steuerdruck, welcher dem Behälter 4 entstammt, beaufschlagt ist, eine weitere Steuerfläche 94 besitzt. Für das dargestellte Ausführungsbeispiel ist die Steuerfläche 53 als Ringfläche ausgebildet, während die Steuerfläche 94 von einer Stirnfläche 95 des Ventilschiebers 52 gebildet ist. Das Federspeicherventil 20 bzw. das Anhängerbremsventil 11 besitzt in diesem Fall einen Anschluss 96, über welchen eine Beaufschlagung mit einem (weiteren) Steuerdruck über eine Steuerleitung 97 erfolgt. Der Druck in der Steuerleitung 97 wird vorgegeben durch eine Steuereinheit, bei welcher es sich um die Steuereinheit 72 handeln kann, so dass diese eine weitere Funktion erfüllen kann. Möglich ist, dass über eine elektrische Signalleitung 98 der Steuereinheit 72 Signale von einer Sensorik des Anhängers zugeführt werden.

Während der Fahrt wird grundsätzlich kein Steuerdruck in der Steuerleitung 97 erzeugt. Kommt es während der Fahrt zu einem hohen Luftverbrauch, insbesondere durch eine intensive modulierte Bremsbetätigung, welche ohne weitere Maßnahmen zum Umschalten des Federspeicherventils 20 und damit zum Einfallen der Federspeicherbremsen führen würde, wird über die Steuereinheit 72 ein Steuerdruck in der Steuerleitung 97 erzeugt. Mittels der auf die Steuerfläche 94 ausgeübten Kraft kann dann das Federspeicherventil 20 weiter in der Belüftungsstellung gehalten werden. Die Steuerfläche 94 ist hierbei vorzugsweise derart bemessen, dass allein mit der Beaufschlagung der Steuerfläche 94 durch den Steuerdruck in der Steuerleitung 97 das Federspeicherventil 20 in der Belüftungsstellung gehalten werden kann.

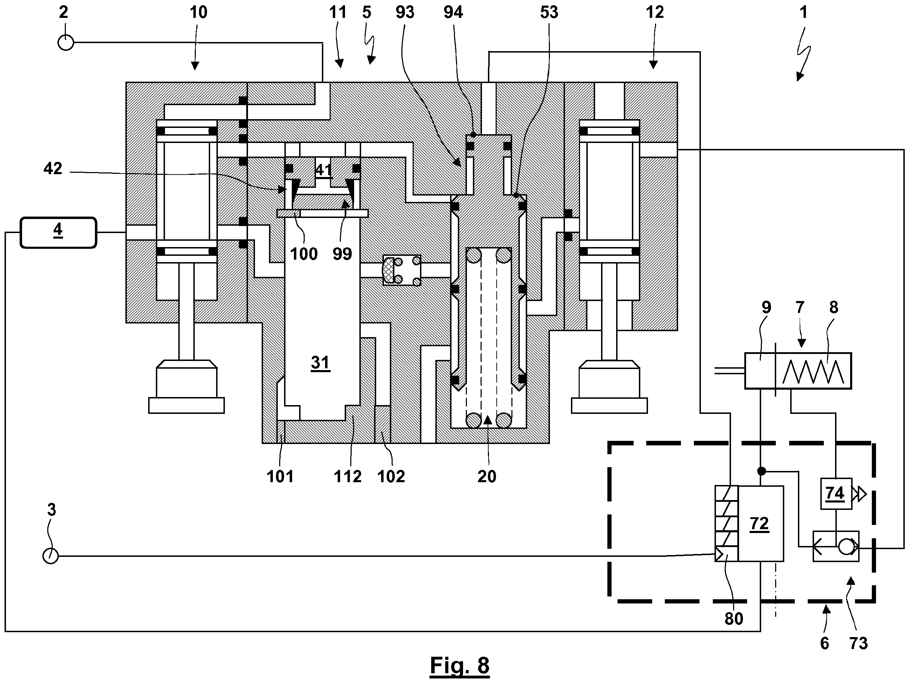

Für das in **Fig. 8** dargestellte Ausführungsbeispiel ist die Ventileinrichtung 5 grundsätzlich entsprechend dem Ausführungsbeispiel gemäß Fig. 7 ausgebildet. Allerdings befinden sich in dem Aufnahmeraum 31 nicht die zur Ausbildung des Notbremsventils 19 erforderlichen Bauelemente. Vielmehr ist in den Aufnahmeraum 31 ein fixierter Einsatz 99 eingesetzt, welcher über einen Sicherungsring 100 gesichert ist und den Kanal 41 ausbildet und das Rückschlagventil 42 beinhaltet. Die Anschlüsse 27 bzw. 28 und 29 bzw. 30 sind hier mit Verschlusselementen 101, 102 verschlossen. Das Federspeicherventil 20 erfüllt grundsätzlich die zuvor erläuterte Funktion. In diesem Fall wird eine Notbremswirkung beispielsweise bei Abriss beider Kupplungsköpfe 2, 3 sowie eine Feststellbremswirkung allein durch das Federspeicherventil 20 herbeigeführt, was einerseits durch die Beaufschlagung der Steuerfläche 53 mit dem Druck des Behälters 4 erfolgt und andererseits durch elektropneumatische Steuerung der Beaufschlagung der Steuerfläche 94 durch die Steuereinheit 72 erfolgen kann. In jedem Fall erfolgt hier aber die Herbeiführung der Notbremswirkung über die Federspeicherbremse.

Für das dargestellte Ausführungsbeispiel ist der Kupplungskopf Bremse 3 unmittelbar, also ohne Zwischenordnung eines Wechselventils 71, mit dem Steueranschluss 80 der Steuereinheit 72 verbunden.

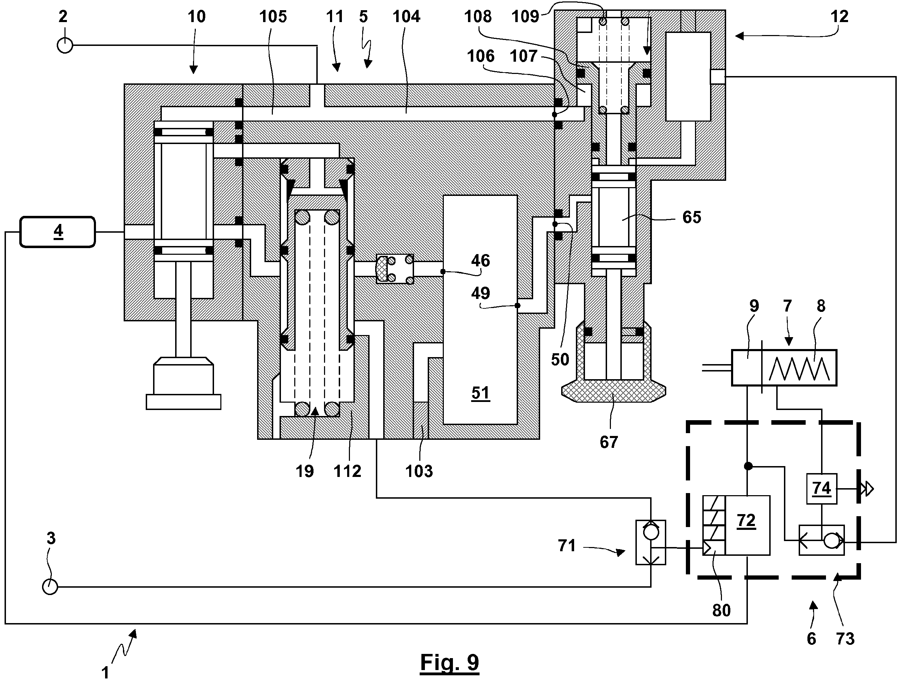

Für das in **Fig. 9** dargestellte Ausführungsbeispiel sind in dem Aufnahmeraum 51 nicht die für die Ausbildung des Federspeicherventils 20 erforderlichen Bauelemente angeordnet. Vielmehr stellt der Aufnahmeraum 51 eine ständige Verbindung zwischen den Anschlüssen 46 und 49 bereit. Der Anschluss 47 bzw. 48 ist hier mit einem Verschlusselement 103 verschlossen. Der Anschluss 45 ist in diesem Fall entfallen, so dass der Aufnahmeraum 51 keinerlei Verbindung mit dem Anschluss 14 des Löseventils 10 hat. In dem Anhängerbremsventil 11 zweigt eine Zweigleitung 104 von der Leitung 105, welche den Kupplungskopf Vorrat 2 mit dem Anschluss 13 des Löseventils 10 verbindet, ab. In diesem Fall verfügt das Anhängerbremsventil 11 zusätzlich zu dem Anschluss 50 über einen weiteren Anschluss 106, über welchen die Zweigleitung 104 mit einer Steuerkammer 107 des Parkventils 12 verbunden ist. Liegt an dem Kupplungskopf Vorrat 2 und damit an dem Anschluss 106 Druck an, ist die Steuerkammer 107 druckbeaufschlagt, was zur Folge hat, dass ein Steuerkolben 108 gegen die Beaufschlagung durch eine Druckfeder 109 in Fig. 9 nach oben bewegt wird. In dieser von Fig. 9 abweichenden Stellung des Steuerkolbens 108 kann der Ventilschieber 65 über den Betätigungsknopf 67 manuell sowohl in die Parkstellung als auch in die Stellung Fahrt bewegt werden, wie dies auch für die vorangegangenen Ausführungsformen der Fall war. Entfällt aber die Druckbeaufschlagung der Steuerkammer 107, überführt die Druckfeder 109 den Steuerkolben 108 in die Fig. 9 dargestellte Stellung, in welcher der Ventilschieber 65 zwingend die Parkstellung einnimmt. Hinsichtlich weiterer Details zu einer derartigen Ausgestaltung des Parkventils 12 mit integrierter Notbremsfunktion über die Federspeicherbremse wird insbesondere auf die Patentanmeldungen DE 10 2007 053 765 A1 und DE 10 2007 053 764 A1 der Anmelderin verwiesen, die zum Gegenstand der vorliegenden Anmeldung gemacht werden und in denen ein derartiges Parkventil näher beschrieben worden ist.

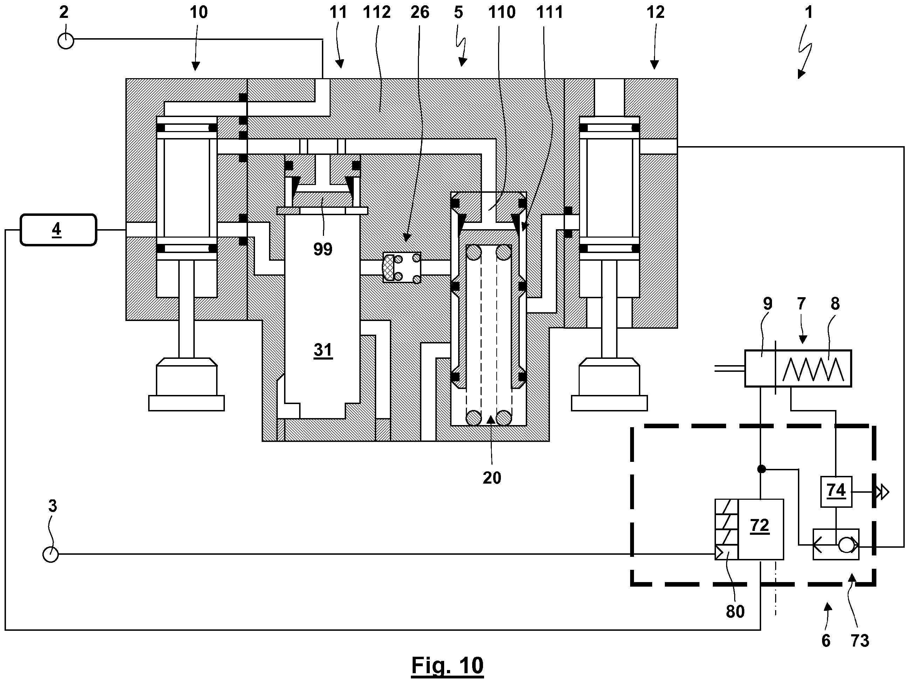

Gemäß **Fig. 10** ist das Anhängerbremsventil 11 ohne die Bauelemente des Notbremsventils 19 ausgebildet - auch hier ist entsprechend Fig. 8 in dem Aufnahmeraum 31 lediglich der Einsatz 99 angeordnet. Das Federspeicherventil 20 ist in diesem Fall grundsätzlich entsprechend Fig. 1 ausgebildet. Allerdings ist hier die Steuerkammer 58 über einen Kanal 110 mit einem in Richtung der Ringkammer 59 öffnenden Rückschlagventil 111 ausgebildet. Eine Umschaltung des Federspeicherventils 20 von der in Fig. 10 wirksamen Entlüftungsstellung in die Belüftungsstellung ist hierbei ausschließlich abhängig von dem Druck an dem Kupplungskopf Vorrat 2. Infolge der Verbindung des Ringraums 59 in der Belüftungsstellung sowohl über das Rückschlagventil 26 mit dem Behälter 4 als auch über das Rückschlagventil 111 mit dem Kupplungskopf Vorrat 2 liegt an dem Anschluss 49 des Federspeicherventils 20 der größere Druck von dem Druck in dem Behälter 4 und dem Druck in dem Kupplungskopf Vorrat 2 an.

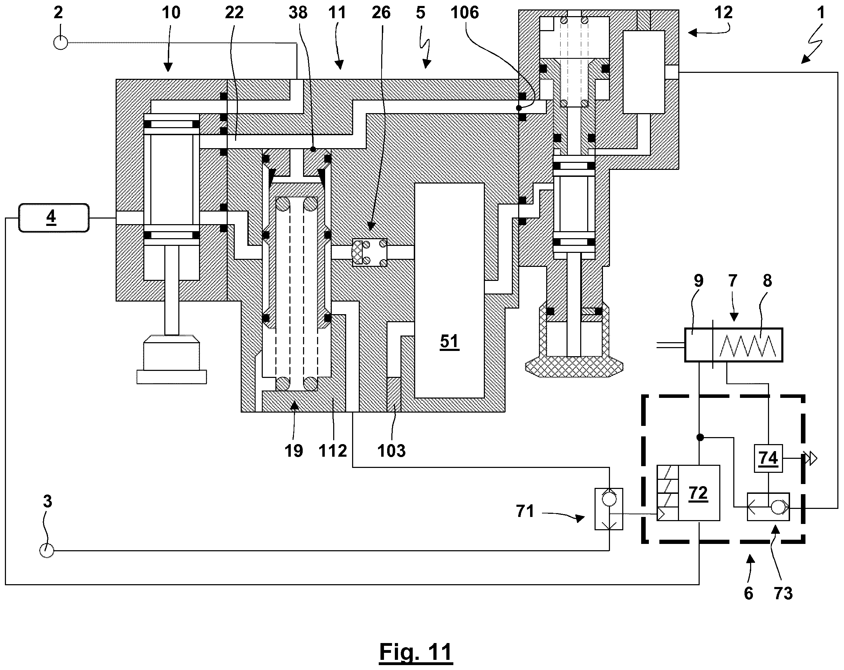

Das in **Fig. 11** dargestellte Ausführungsbeispiel entspricht im Wesentlichen dem Ausführungsbeispiel gemäß Fig. 9. Allerdings sind hier die Steuerkammer 107 und der Anschluss 106 nicht über die Zweigleitung 104 mit dem Kupplungskopf Vorrat 2 verbunden. Vielmehr erfolgt die Beaufschlagung der Steuerkammer 107 des Parkventils 12 über den Anschluss 106, indem der Anschluss 106 in dem Anhängerbremsventil 11 unmittelbar mit der Steuerkammer 38 bzw. dem Anschluss 22 des Anhängerbremsventils verbunden ist.

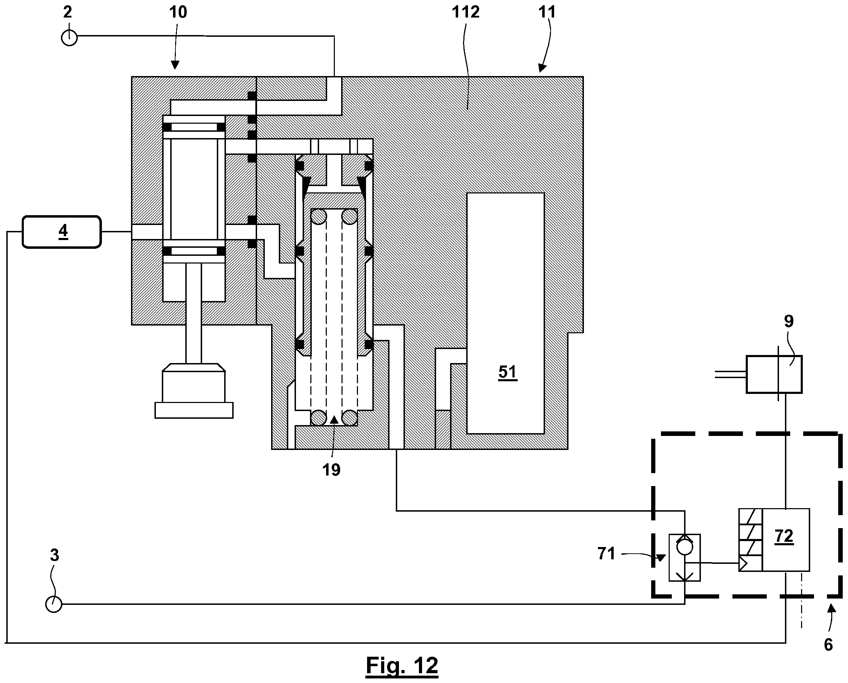

Für das in **Fig. 12** dargestellte Ausführungsbeispiel verfügt das Anhängerbremsventil ausschließlich über das Notbremsventil 19, während das Federspeicherventil durch Entfall der für die Funktion erforderlichen Bauelemente in dem Aufnahmeraum 51 entfallen ist. Die Ventileinrichtung 5 ist hier auch ohne Parkventil 12 ausgebildet. Die Herbeiführung einer Notbremswirkung erfolgt mit der Umschaltung des Notbremsventils 19. In diesem Fall handelt es sich bei der Bremse nicht um Kombi-Bremszylinder, sondern reine Betriebsbremszylinder. Auch für diesen Einsatzfall kann ein Gehäuse 112 entsprechend den zuvor erläuterten Ausführungsformen verwendet werden, sofern die Bauelemente und Anschlüsse für die Bildung des Federspeicherventils 20 entfallen oder verschlossen sind.

In diesem Fall kann auch die weitere Ventileinrichtung 6 vereinfacht ausgebildet sein, indem diese beispielsweise, wie in Fig. 12 dargestellt, lediglich das Wechselventil 71 und die Steuereinheit 72 beinhaltet, nicht jedoch das Wechselventil 73 und das Schnellentlüftungsventil 74.

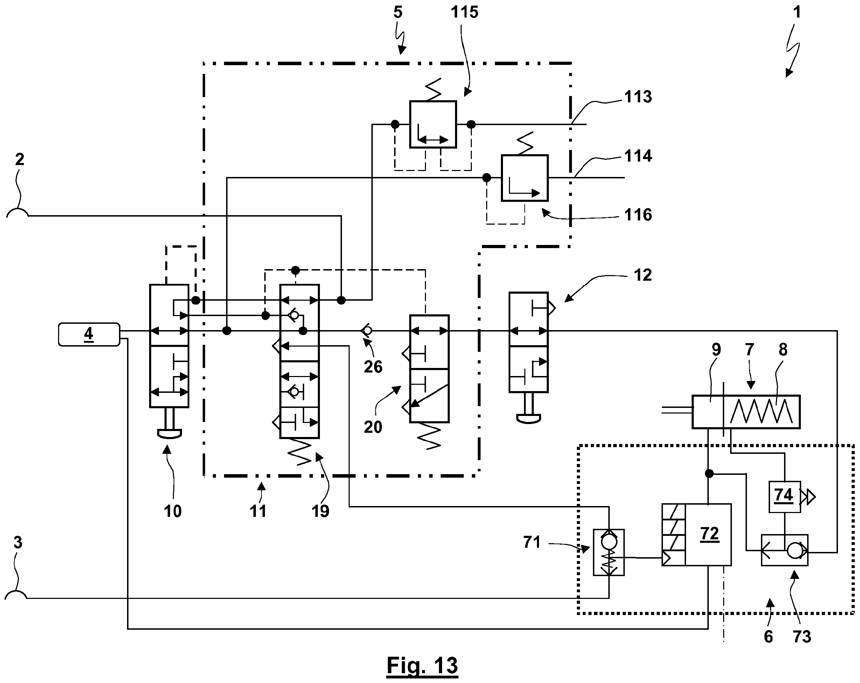

**Fig. 13** zeigt in einer veränderten Darstellungsart, nämlich mit Funktionsbildern der Ventile, eine Ventileinrichtung 5, die grundsätzlich gemäß Fig. 1 ausgebildet ist. Abweichend sind aber hier das Parkventil 12 und das Löseventil 10 separat von dem Anhängerbremsventil 11 ausgebildet und die Leitung 105 ist durch das Anhängerbremsventil 11 hindurchgeführt. Hier findet auch ein priorisiertes Wechselventil 71 in der weiteren Ventileinrichtung 6 Einsatz.

Fig. 13 zeigt die Integration weiterer Bauelemente und Funktionen in die Ventileinrichtung 5 bzw. das Anhängerbremsventil 11. Für das Ausführungsbeispiel gemäß Fig. 13 verfügt die Ventileinrichtung 5 bzw. das Anhängerbremsventil 11 über Ausgangsanschlüsse 113, 114, über welche eine Druckluftversorgung von Verbraucherkreisen des Anhängers erfolgen kann. Der Ausgangsanschluss 113 ist über ein Überströmventil 115, hier mit begrenzter Rückströmung, verbunden mit dem Kupplungskopf Vorrat 2, was über eine Verbindung mit der Leitung 105 oder einem Eingangsanschluss des Anhängerbremsventils 11, welcher mit dem Kupplungskopf Vorrat 2 verbunden ist, erfolgen kann. Der Ausgangsanschluss 114 ist über ein Überströmventil 116 verbunden mit dem Behälter 4, was beispielsweise erfolgen kann über eine Zweigleitung zwischen den Anschlüssen 23, 24.

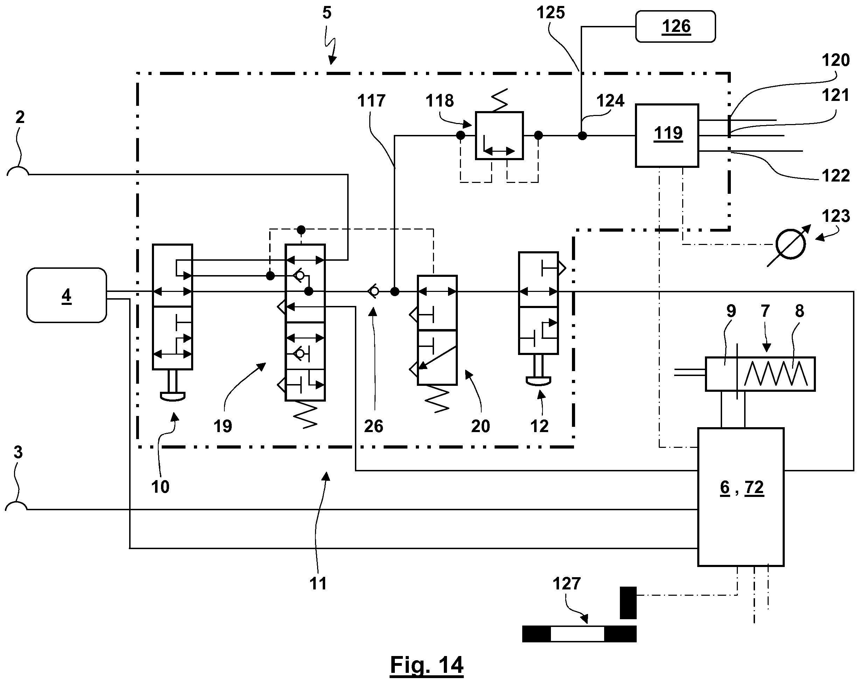

Gemäß **Fig. 14** ist eine singuläre, vorzugsweise modulare Baueinheit mit dem Parkventil 10, dem Anhängerbremsventil 11 und dem Löseventil 12 gebildet, wie dies mit der strich-doppelpunktierten Linie dargestellt ist. Hier zweigt zwischen dem Rückschlagventil 26 und dem Federspeicherventil 20 eine Zweigleitung 117 ab, welche über ein Überströmventil 118, hier mit begrenzter Rückströmung, mit einer weiteren Ventileinrichtung 119 verbunden ist. Über die weitere Ventileinrichtung 119 erfolgt die Speisung von Ausgangsanschlüssen 120, 121, 122 für weitere Druckluftverbraucher. Beispielsweise sind den Ausgangsanschlüssen 120, 121, 122 Luftfederbälge von zwei Kreisen sowie ein Liftbalg zugeordnet. Die Ventileinrichtung 119 und damit die Be- und Entlüftung der Ausgangsanschlüsse 120-122 wird elektrisch gesteuert durch eine Steuereinheit, insbesondere die Steuereinheit 72 der Ventileinrichtung 6. Vorhanden sein kann ein Niveausensor 123, auf Grundlage dessen eine Steuerung der Ventileinrichtung 119 erfolgt, wobei mit der Be- und Entlüftung der Ausgangsanschlüsse 120, 121, 122 eine Steuerung oder Regelung des Fahrzeugsniveaus erfolgen kann. Abweichend zu Fig. 14 kann das Ausgangssignal des Niveausensors 123 auch der Ventileinrichtung 6 und der Steuereinheit 72 zugeführt werden, welche dann geeignet die Ventileinrichtung 119 zur Durchführung einer Niveauregelung ansteuert. Zwischen dem Überströmventil 118 und der Ventileinrichtung 119 zweigt eine weitere Zweigleitung 124 ab, über welche mit einem geeigneten Anschluss 125 der Ventileinrichtung 5 eine Verbindung mit einem weiteren Behälter 126 erfolgt, der bspw. einem weiteren Verbraucherkreis zugeordnet ist.

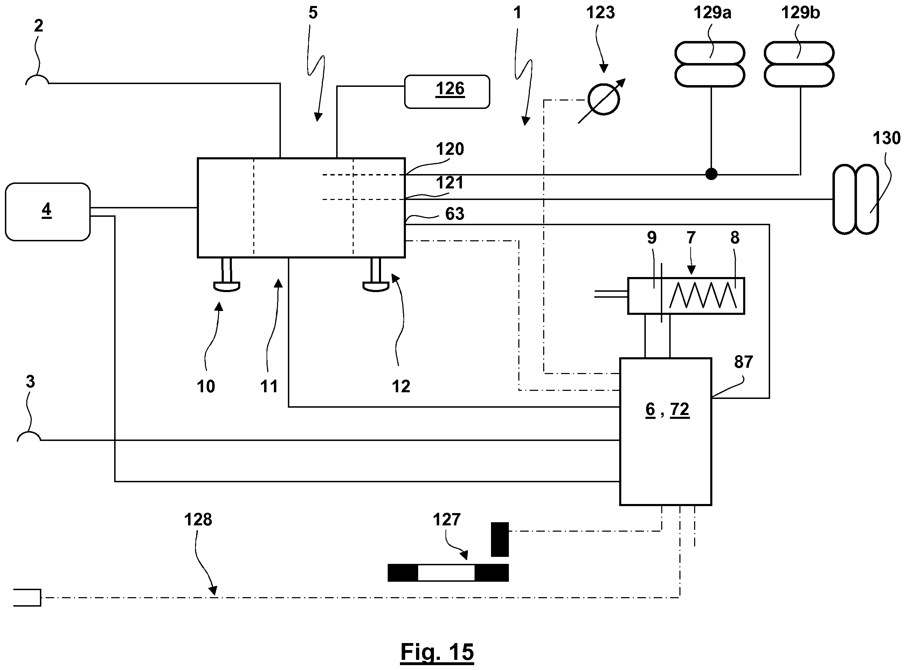

Gemäß dem in **Fig. 15** stark schematisiert dargestellten Ausführungsbeispiel wird der Ventileinrichtung 6 oder der Steuereinheit 72 das Signal eines Rad-Drehzahlsensors 127 sowie ein Signal des Niveausensors 123 zugeführt. Darüber hinaus werden der Steuereinheit Signale über einen CAN oder PLC 128 zugeführt. Der Ausgangsanschluss 120 der Ventileinrichtung ist hier wie dargestellt mit Luftfederbälgen 129a, 129b verbunden, während der Ausgangsanschluss 121 mit einem Liftbalg 130 verbunden ist. Der Anschluss 63 ist, wie zuvor erläutert, mit der Ventileinrichtung über einen Anschluss 78 verbunden.

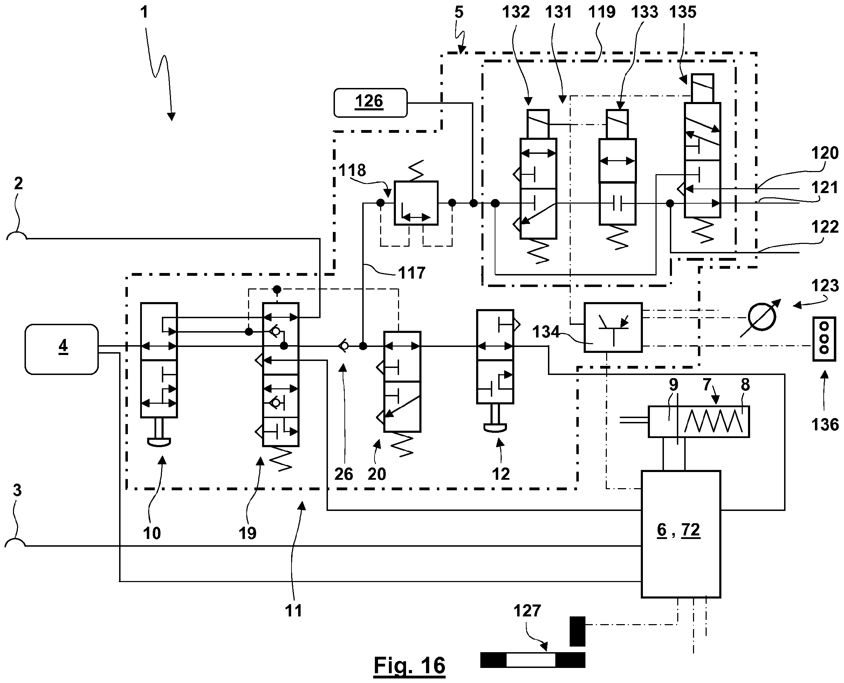

**Fig. 16** zeigt bei im Wesentlichen Fig. 14 entsprechender Ausgestaltung ein Ausführungsbeispiel für die Gestaltung der Ventileinrichtung 119. Diese besitzt eine Niveauregeleinrichtung 131, welche mit der Hintereinanderschaltung eines 3/2-Wegeventils 132 und einem 2/2-Wegeventils 133 gebildet ist. Die Ventile 132, 133 sind elektrisch angesteuert durch eine elektronische Steuereinheit 134, welche hier in die Ventileinrichtung 5 integriert ist und die mit der Ventileinrichtung 5, nämlich der Steuereinheit 72 kommuniziert. Der Steuereinheit 134 wird das Niveau der Luftfederungsanlage zugeführt, welches von dem Niveausensor 123 gemessen wird. Erkennt die Steuereinheit 134, dass eine Niveauänderung erforderlich ist, kann diese die Niveauventileinrichtung 131 so ansteuern, dass an den Ausgangsanschlüssen 121, 122 der Druck für die erforderliche Niveauänderung ausgesteuert wird. Das 3/2-Wegeventil 132 besitzt eine (in Fig. 16 nicht wirksame) Belüftungsstellung, welche vorzugsweise mit elektrischer Bestromung eingenommen wird. In der Belüftungsstellung wird der Ausgangsanschluss des 3/2-Wegeventils 132 verbunden mit dem Überströmventil 118 und dem Behälter 126. Hingegen wird in einer Entlüftungsstellung der Ausgangsanschluss des 3/2-Wegeventils 132 entlüftet. Der Ausgang des 3/2-Wegeventils 132 ist verbunden mit dem Eingang des 2/2-Wegeventils. In der Sperrstellung, welche bevorzugt ohne elektrische Bestromung des 2/2-Wegeventils 133 eingenommen wird, ist die Verbindung des Eingangsanschlusses mit dem Ausgangsanschluss 122 abgesperrt, während in der Durchlassstellung des 2/2-Wegeventils 133 der Ausgangsanschluss 122 je nach Stellung des 3/2-Wegeventils 132 be- oder entlüftet werden kann. An den Ausgangsanschluss des 2/2-Wegeventils 133 ist auch ein Liftachsventil 135 angeschlossen, bei welchem es sich bspw. wie dargestellt um ein 5/2-Wegeventil handeln kann. Ausgangsseitig verfügt das Liftachsventil 135 über zwei Anschlüsse, welche mit den Ausgangsanschlüssen 120, 121 verbunden sind. Ein Eingangsanschluss des Liftachsventils 135 ist mit dem Ausgang des 2/2-Wegeventils 133 (und dem Ausgangsanschluss 122) verbunden, während ein weiterer eingangsseitiger Anschluss mit einer Entlüftung verbunden ist und ein dritter eingangsseitiger Anschluss mit dem Ausgang des Überströmventils 118 und dem Behälter 126 verbunden ist. Die Ansteuerung des Liftachsventils 135, welches wie die Ventile 132, 133 als Magnetventil ausgebildet ist, erfolgt über die Steuereinheit 134.

In der in Fig. 16 wirksamen Schaltstellung ist der Ausgangsanschluss 120, welcher zu dem Liftbalg 130 führt, entlüftet, während der einem Luftfederbalg einer tragenden Achse zugeordnete Ausgangsanschluss 121 mit der Niveauregelventileinrichtung 131 verbunden ist, so dass eine Niveauregelung für diesen Luftfederbalg erfolgen kann. Hierbei liegt an den Ausgangsanschlüssen 121, 122 derselbe Druck an. Mit Umschaltung des Liftachsventils 135 durch die Steuereinheit 134 wird der dem Liftbalg zugeordnete Ausgangsanschluss 120 belüftet, während der Ausgangsanschluss 121 entlüftet wird.

Zusätzlich kann die Druckluftanlage 1 eine manuelle Bedieneinrichtung 136 besitzen, über welche der Steuereinheit 134 ein Wunsch eines Bedieners nach einem Heben und/oder Senken des Fahrzeugaufbaus übermittelt werden kann, insbesondere für eine Rampenanpassung zum Be- und Entladen des Anhängers. Je nach Signal an der Bedieneinrichtung 136 steuert die Steuereinheit 134 die Niveauregelventileinrichtung 131 geeignet für ein Heben, Senken oder Halten des Fahrzeugaufbaus an.

In den Figuren ist zu erkennen, dass dasselbe Gehäuse 112 des Anhängerbremsventils 11
- für Ventileinrichtungen einer ersten Teilgruppe einsetzbar ist, welche sowohl mit dem Notbremsventil 19 als auch mit dem Federspeicherventil 20 ausgestattet sind (s. Fig. 1 - 3, 4, 5, 6, 7), sowie
- für Ventileinrichtungen einer zweiten Teilgruppe einsetzbar ist, welche nicht mit dem Notbremsventil 19 und/oder nicht mit dem Federspeicherventil 20 ausgestattet sind (s. Fig. 8, 9, 10, 11, 12).

In einer Art Baukastenprinzip kann damit dasselbe Gehäuse 112 für unterschiedliche Produkte und Einsatzfälle eingesetzt werden.

Vorzugsweise sind/ist das Notbremsventil 19 und/oder das Federspeicherventil 20 nicht als Relaisventile/Relaisventil ausgebildet, sondern als Umschaltventile/Umschaltventil. Ein derartiges Umschaltventil verfügt insbesondere ausschließlich über "binäre" Betriebszustände "belüftet" und "entlüftet", wobei in dem Betriebszustand "belüftet" der von dem Umschaltventil weitergegebene Belüftungsdruck von einem Behälterdruck abhängig sein kann.

### BEZUGSZEICHENLISTE

- 1: Druckluftanlage
- 2: Kupplungskopf Vorrat
- 3: Kupplungskopf Bremse
- 4: Behälter
- 5: Ventileinrichtung
- 6: Ventileinrichtung
- 7: Kombi-Bremszylinder
- 8: Federspeicherkammer
- 9: Betriebsbremskammer
- 10: Löseventil
- 11: Anhängerbremsventil
- 12: Parkventil
- 13: Anschluss
- 14: Anschluss
- 15: Anschluss
- 16: Anschluss
- 17: Ventilschieber
- 18: Betätigungsknopf
- 19: Notbremsventil
- 20: Federspeicherventil
- 21: Anschluss
- 22: Anschluss
- 23: Anschluss
- 24: Anschluss
- 25: Anschluss
- 26: Rückschlagventil
- 27: Anschluss
- 28: Anschluss
- 29: Anschluss
- 30: Entlüftung
- 31: Aufnahmeraum
- 32: Ventilschieber
- 33: Steuerfläche
- 34: Stirnfläche
- 35: Dichtkante
- 36: Steuerkante
- 37: Steuerkante
- 38: Steuerkammer
- 39: Ringraum
- 40: Ringraum
- 41: Kanal
- 42: Rückschlagventil
- 43: Dichtlippe
- 44: Druckfeder
- 45: Anschluss
- 46: Anschluss
- 47: Anschluss
- 48: Entlüftung
- 49: Anschluss
- 50: Anschluss
- 51: Aufnahmeraum
- 52: Ventilschieber
- 53: Steuerfläche
- 54: Stirnfläche
- 55: Dichtkante
- 56: Steuerkante
- 57: Dichtkante
- 58: Steuerkammer
- 59: Ringraum
- 60: Ringraum
- 61: Druckfeder
- 62: Anschluss
- 63: Anschluss
- 64: Anschluss
- 65: Ventilschieber
- 66: Aufnahmeraum
- 67: Betätigungsknopf
- 68: Steuerkante
- 69: Dichtkante
- 70: Ringraum
- 71: Wechselventil
- 72: Steuereinheit
- 73: Wechselventil
- 74: Schnellentlüftungsventil
- 75: Eingang
- 76: Anschluss
- 77: Eingang
- 78: Anschluss
- 79: Ausgang
- 80: Steueranschluss
- 81: Anschluss
- 82: Anschluss
- 83: Betriebsbremssteuerleitung
- 84: Anschluss
- 85: Eingang
- 86: Eingang
- 87: Anschluss
- 88: Ausgang
- 89: Entlüftung
- 90: Federspeicherbremsleitung
- 91: Anschluss
- 92: Magnetventil
- 93: Differentialkolben
- 94: Steuerfläche
- 95: Stirnfläche
- 96: Anschluss
- 97: Steuerleitung
- 98: Signalleitung
- 99: Einsatz
- 100: Sicherungsring
- 101: Verschlusselement
- 102: Verschlusselement
- 103: Verschlusselement
- 104: Zweigleitung
- 105: Leitung
- 106: Anschluss
- 107: Steuerkammer
- 108: Steuerkolben
- 109: Druckfeder
- 110: Kanal
- 111: Rückschlagventil
- 112: Gehäuse
- 113: Ausgangsanschluss
- 114: Ausgangsanschluss
- 115: Überströmventil
- 116: Überströmventil
- 117: Zweigleitung
- 118: Überströmventil
- 119: Ventileinrichtung
- 120: Ausgangsanschluss
- 121: Ausgangsanschluss
- 122: Ausgangsanschluss
- 123: Niveausensor
- 124: Zweigleitung
- 125: Anschluss
- 126: Behälter
- 127: Drehzahlsensor
- 128: CAN/PLC
- 129: Luftfederbalg
- 130: Liftbalg
- 131: Niveauregelventileinrichtung
- 132: 3/2-Wegeventil
- 133: 2/2-Wegeventil
- 134: Steuereinheit
- 135: Liftachsventil
- 136: Bedieneinrichtung
- 137: Verzweigung
- 138: Steuerleitung

## Patentansprüche

1. Ventileinrichtung (5) für eine Druckluftanlage (1) eines Anhängers eines Nutzfahrzeugs mit
a) einem manuell betätigbaren Parkventil (12),
b) einem manuell betätigbaren Löseventil (10),
c) einem Notbremsventil (19), welches die Druckbeaufschlagung einer Betriebsbremse in Abhängigkeit von einem Druck an einem mit dem Kupplungskopf Vorrat (2) verbindbaren Anschluss (21) steuert,
**dadurch gekennzeichnet, dass**
d) ein Federspeicherventil (20) vorhanden ist, welches die Druckbeaufschlagung einer Federspeicherbremse in Abhängigkeit von einem Druck an einem mit dem Kupplungskopf Vorrat (2) verbindbaren Anschluss (45) und/oder in Abhängigkeit von einem mit dem Behälter (4) verbundenen Anschluss (45) steuert, wobei
e) das Federspeicherventil (20) und das Notbremsventil (19) funktional voneinander unabhängig sind.

2. Ventileinrichtung (5) nach Anspruch 1, **dadurch gekennzeichnet, dass** das Federspeicherventil (20) und das Notbremsventil (19) unterschiedliche Umschaltdrücke besitzen.

3. Ventileinrichtung (5) nach Anspruch 1 oder 2, **dadurch gekennzeichnet, dass** ein Steuerdruck des Federspeicherventils (20) von einer Betriebsstellung des Notbremsventils (19) abhängig ist.

4. Ventileinrichtung (5) nach einem der vorhergehenden Ansprüche, **dadurch gekennzeichnet, dass** das Notbremsventil (19) und das Federspeicherventil (20) über parallele Steuerleitungszweige angesteuert werden.

5. Ventileinrichtung (5) nach einem der vorhergehenden Ansprüche, **dadurch gekennzeichnet, dass** das Löseventil (10) in einem zu dem Notbremsventil (19) führenden Leitungszweig angeordnet ist.

6. Ventileinrichtung (5) nach Anspruch 4, **dadurch gekennzeichnet, dass** das Löseventil (10) vor einer Verzweigung (137) zu den beiden Steuerleitungszweigen angeordnet ist.

7. Ventileinrichtung (5) nach einem der vorhergehenden Ansprüche, **dadurch gekennzeichnet, dass** das Löseventil (5)
a) einen mit einem Kupplungskopf Vorrat verbindbaren Anschluss (13),
b) einen Anschluss (14) für den Steuerdruck für das Notbremsventil (19),
c) einen Anschluss (15), der mit einem Behälter verbindbar ist, und
d) einen Anschluss (16), über welchen bei befülltem Behälter (4) eine Versorgung des Notbremsventils (19) mit Druckluft möglich ist,
aufweist.

8. Ventileinrichtung (5) nach einem der vorhergehenden Ansprüche, **dadurch gekennzeichnet, dass** zwischen einen Anschluss (25) des Notbremsventils (19) und einen Anschluss (46) des Federspeicherventils (20) ein Rückschlagventil (26) zwischengeschaltet ist, welches in Richtung des Federspeicherventils (20) öffnet, aber in Richtung des Notbremsventils (19) sperrt.

9. Ventileinrichtung (5) nach einem der vorhergehenden Ansprüche, **dadurch gekennzeichnet, dass** die Ventileinrichtung (5) oder ein Anhängerbremsventil (11) der Ventileinrichtung (5) ohne einen Anschluss für einen Kupplungskopf Bremse (3) ausgebildet ist.

10. Ventileinrichtung (5) nach einem der vorhergehenden Ansprüche, **dadurch gekennzeichnet, dass** ein Steuerraum (38) des Notbremsventils (19) über ein Rückschlagventil (42) mit einem mit dem Behälter (4) verbindbaren Anschluss (23) und/oder einem mit dem Federspeicherventil (20) verbindbaren Anschluss (25) verbunden ist, wobei das Rückschlagventil (42) in Richtung des mit dem Behälter (4) verbindbaren Anschlusses (23) und/oder des mit dem Federspeicherventil (20) verbindbaren Anschlusses (25) öffnet, aber in Richtung des Steuerraums (38) sperrt.

11. Ventileinrichtung (5) nach einem der vorhergehenden Ansprüche, **dadurch gekennzeichnet, dass** das Notbremsventil (19) und/oder das Federspeicherventil (20) als Schieberventil ausgebildet ist/sind.

12. Ventileinrichtung (5) nach einem der vorhergehenden Ansprüche, **dadurch gekennzeichnet, dass** das Federspeicherventil (20)
a) einen Anschluss (45) für einen Steuerdruck,
b) einen Anschluss (46) für eine Verbindung mit dem Notbremsventil (19) und
c) einen Anschluss (49) für eine Verbindung mit dem Parkventil (12) aufweist.

13. Ventileinrichtung (5) nach einem der vorhergehenden Ansprüche, **dadurch gekennzeichnet, dass** das Notbremsventil (19)
a) einen Anschluss (21) für einen Steuerdruck,
b) einen Anschluss (23) für eine Verbindung mit dem Behälter (4),
c) einen Anschluss (25) für eine Verbindung mit dem Federspeicherventil (20) und
d) einen Anschluss (27) für eine Ausgabe eines Steuerdrucks für eine Betriebsbremse aufweist.

14. Ventileinrichtung (5) nach einem der vorhergehenden Ansprüche, **dadurch gekennzeichnet, dass** das Notbremsventil (20) einen Anschluss (25) besitzt, der
a) sowohl mit einem Steuerraum (58) des Federspeicherventils (20)
b) als auch mit einem Anschluss (46) des Federspeicherventils (20), welcher in einer Stellung des Federspeicherventils (20) über das Federspeicherventil (20) mit dem Parkventil (12) verbunden ist,
verbunden ist.

15. Ventileinrichtung (5) nach einem der vorhergehenden Ansprüche, **dadurch gekennzeichnet, dass** das Notbremsventil (19) über ein Magnetventil (92) mit einem Steuerraum (58) des Federspeicherventils (20) verbunden ist.

16. Ventileinrichtung (5) nach einem der vorhergehenden Ansprüche, **dadurch gekennzeichnet, dass** ein Ventilschieber (52) mit einem Differentialkolben (93) gebildet ist.

17. Ventileinrichtung (5) nach Anspruch 16, **dadurch gekennzeichnet, dass** der Differentialkolben (93)
a) eine erste Steuerfläche (53) besitzt, welche mit dem Druck an dem Kupplungskopf Vorrat (2) beaufschlagbar ist, sowie
b) eine zweite Steuerfläche (94) besitzt, welche mit einem von einer Steuereinheit (72) ausgesteuerten Steuerdruck beaufschlagbar ist.

18. Ventileinrichtung (5) nach Anspruch 17, **dadurch gekennzeichnet, dass** die Steuereinheit (72), welche den die zweite Steuerfläche (94) beaufschlagenden Steuerdruck aussteuert, auch eine Modulation des Betriebsbremsdruckes herbeiführt.

19. Ventileinrichtung (5) nach einem der vorhergehenden Ansprüche, **dadurch gekennzeichnet, dass** ein Wechselventil (71) vorhanden ist, wobei
a) ein Eingang (77) des Wechselventils (71) mit einem Anschluss (27) des Notbremsventils (19) verbunden ist,
b) ein Eingang (75) des Wechselventils (71) mit dem Kupplungskopf Bremse (3) verbunden ist und
c) ein Ausgang (79) des Wechselventils (71) mit einem Steueranschluss (80) einer Steuereinheit (72) für die Aussteuerung eines Betriebsbremsdruckes verbunden ist.

20. Ventileinrichtung (5) nach Anspruch 19, **dadurch gekennzeichnet, dass** bei dem Wechselventil (71) der mit dem Kupplungskopf Bremse (3) verbundene Anschluss (75) priorisiert ist.

21. Ventileinrichtung (5) nach einem der vorhergehenden Ansprüche, **dadurch gekennzeichnet, dass** ein Wechselventil (73) vorhanden ist, wobei
a) ein Eingang (85) des Wechselventils (73) mit einer Betriebsbremsleitung (83) verbunden ist,
b) ein Eingang (86) des Wechselventils (73) mit einem Anschluss (63) des Parkventils (12) verbunden ist und
c) ein Ausgang (88) des Wechselventils (73) den Druck in einer Federspeicherbremsleitung (90) vorgibt.

22. Ventileinrichtung (5) nach Anspruch 21, **dadurch gekennzeichnet, dass** der Ausgang (88) des Wechselventils (73) über ein Schnelllöseventil (74) mit der Federspeicherbremsleitung (90) verbunden ist.

23. Gruppe von Ventileinrichtungen mit
a) einer ersten Teilgruppe mit Ventileinrichtungen (5) nach einem der vorhergehenden Ansprüche und
b) einer zweiten Teilgruppe mit Ventileinrichtungen, bei denen
ba) das Gehäuse (112) eines Anhängerbremsventils baugleich mit dem Gehäuse (112) eines Anhängerbremsventils (11) der Ventileinrichtungen (5) der ersten Teilgruppe ausgebildet ist,
bb) aber kein Notbremsventil (19) und/oder kein Federspeicherventil (20) in dem Anhängerbremsventil (11) vorhanden ist.

## Claims

1. Valve device (5) for a pressurised air system (1) of a trailer of a commercial vehicle comprising
a) a parking valve (12) which can be actuated manually,
b) a shunting valve (10) which can be actuated manually,
c) an emergency brake valve (19) which controls the pressurisation of a service brake dependent on a pressure at a port (21) which can be connected to a supply coupling head (2),
**characterised in that**
d) a spring brake valve (20) is provided which controls the pressurisation of a spring brake dependent on a pressure at a port (45) which can be connected to the supply coupling head (2) and/or dependent on a port (45) connected to the reservoir (4),
e) the spring brake valve (20) and the emergency brake valve (19) are functionally independent on each other.

2. Valve device (5) according to claim 1, **characterised in that** the spring brake valve (20) and the emergency brake valve (19) have different switching pressures.

3. Valve device (5) according to claim 1 or 2, **characterised in that** a control pressure of the spring brake valve (20) depends on an operating position of the emergency brake valve (19).

4. Valve device (5) according to one of the preceding claims, **characterised in that** the emergency brake valve (19) and the spring brake valve (20) are controlled via parallel control line branches.

5. Valve device (5) according to one of the preceding claims, **characterised in that** the shunting valve (10) is arranged in a line branch leading to the emergency brake valve (19).

6. Valve device (5) according to claim 4, **characterised in that** the shunting valve (10) is arranged upstream from a branching point (137) to the two control line branches.

7. Valve device (5) according to one of the preceding claims, **characterised in that** the shunting valve (5) comprises
a) a port (13) which can be connected to a supply coupling head,
b) a port (14) for the control pressure for the emergency brake valve (19),
c) a port (15) which can be connected to a reservoir and
d) a port (16) by which it is possible to supply the emergency brake valve (19) with pressurised air if the reservoir (4) is filled.

8. Valve device (5) according to one of the preceding claims, **characterised in that** a check valve (26) is interposed between a port (25) of the emergency brake valve (19) and a port (46) of the spring brake valve (20), said check valve (26) opening towards the spring brake valve (20) but closing towards the emergency brake valve (19).

9. Valve device (5) according to one of the preceding claims, **characterised in that** the valve device (5) or a trailer brake valve (11) of the valve device (5) does not comprise a port for a brake coupling head (3).

10. Valve device (5) according to one of the preceding claims, **characterised in that** a control chamber (38) of the emergency brake valve (19) is connected by a check valve (42) to a port (23) which is connectable to the reservoir (4) and/or to a port (25) which is connectable to the spring brake valve (20), said check valve (42) opening towards the port (23) which is connectable to the reservoir (4) and/or towards the port (25) which is connectable to the spring brake valve (20) but closing towards the control chamber (38).

11. Valve device (5) according to one of the preceding claims, **characterised in that** the emergency brake valve (19) and/or the spring brake valve (20) is/are a sliding valve.

12. Valve device (5) according to one of the preceding claims, **characterised in that** the spring brake valve (20) comprises
a) a port (45) for a control pressure,
b) a port (46) for a connection to the emergency brake valve (19) and
c) a port (49) for a connection to the parking valve (12).

13. Valve device (5) according to one of the preceding claims, **characterised in that** the emergency brake valve (19) comprises
a) a port (21) for a control pressure,
b) a port (23) for a connection to the reservoir (4),
c) a port (25) for a connection to the spring brake valve (20) and
d) a port (27) forming an outlet for a control pressure for a service brake.

14. Valve device (5) according to one of the preceding claims, **characterised in that** the emergency brake valve (20) comprises a port (25) which is connected both
a) to a control chamber (58) of the spring brake valve (20) and
b) to a port (46) of the spring brake valve (20) which is connected to the parking valve (12) via the spring brake valve (20) in one position of the spring brake valve (20).

15. Valve device (5) according to one of the preceding claims, **characterised in that** the emergency brake valve (19) is connected to a control chamber (58) of the spring brake valve (20) via a solenoid valve (92).

16. Valve device (5) according to one of the preceding claims, **characterised in that** a valve slider (52) comprises a differential piston (93).

17. Valve device (5) according to claim 16, **characterised in that** the differential piston (93) comprises
a) a first control surface (53) which can be biased by the pressure at the supply coupling head (2) and
b) a second control surface (94) which can be biased by a control pressure controlled by a control unit (72).

18. Valve device (5) according to claim 17, **characterised in that** the control unit (72) which controls the control pressure biasing the second control surface (94) also provides a modulation of the service brake pressure.

19. Valve device (5) according to one of the preceding claims, **characterised in that** a shuttle valve (71) is provided wherein
a) an inlet (77) of the shuttle valve (71) is connected to a port (27) of the emergency brake valve (19),
b) an inlet (75) of the shuttle valve (71) is connected to the brake coupling head (3) and
c) an outlet (79) of the shuttle valve (71) is connected to a control port (80) of a control unit (72) serving for controlling a service brake pressure.

20. Valve device (5) according to claim 19, **characterised in that** in the shuttle valve (71) the port (75) connected to the brake coupling head (3) is prioritised.

21. Valve device (5) according to one of the preceding claims, **characterised in that** a shuttle valve (73) is provided wherein
a) an inlet (85) of the shuttle valve (73) is connected to a service brake line (83),
b) an inlet (86) of the shuttle valve (73) is connected to a port (63) of the parking valve (12) and
c) an outlet (88) of the shuttle valve (73) defines the pressure in a spring brake line (90).

22. Valve device (5) according to claim 21, **characterised in that** the outlet (88) of the shuttle valve (73) is connected via a quick release valve (74) to the spring brake line (90).

23. Group of valve devices with
a) a first group part with valve devices (5) according to the preceding claims and
b) a second group part with valve devices wherein
ba) the housing (112) of a trailer brake valve has the same construction as the housing (112) of a trailer brake valve (11) of the valve devices (5) of the first group part,
bb) but no emergency brake valve (19) and/or no spring brake valve (20) is provided in the trailer brake valve (11).

## Revendications

1. Système de soupape (5) pour une installation d'air comprimé (1) d'une remorque de véhicule utilitaire, avec
a) une soupape de stationnement (12) pouvant être actionnée manuellement,
b) une soupape de desserrage (10) pouvant être actionnée manuellement,
c) une soupape de freinage d'urgence (19) qui commande l'application d'une pression sur un frein de service en fonction d'une pression sur une jonction (21) pouvant être raccordée à la tête d'attelage réserve (2),
**caractérisé en ce que**
d) une soupape à ressort accumulateur (20) est présente, qui commande l'application d'une pression sur un frein à ressort accumulateur en fonction d'une pression sur une jonction (45) pouvant être raccordée à la tête d'attelage réserve (2) et/ou en fonction d'une jonction (45) raccordée au réservoir (4),
e) la soupape à ressort accumulateur (20) et la soupape de freinage d'urgence (19) étant fonctionnellement indépendantes l'une de l'autre.

2. Système de soupape (5) selon la revendication 1, **caractérisé en ce que** la soupape à ressort accumulateur (20) et la soupape de freinage d'urgence (19) possèdent des pressions de commutation différentes.

3. Système de soupape (5) selon la revendication 1 ou 2, **caractérisé en ce qu'**une pression de commande de la soupape à ressort accumulateur (20) est fonction d'une position de fonctionnement de la soupape de freinage d'urgence (19).

4. Système de soupape (5) selon l'une des revendications précédentes, **caractérisé en ce que** la soupape de freinage d'urgence (19) et la soupape à ressort accumulateur (20) sont commandées par le biais de branches de conduite de commande parallèles.

5. Système de soupape (5) selon l'une des revendications précédentes, **caractérisé en ce que** la soupape de desserrage (10) est disposée dans une branche de conduite conduisant à la soupape de freinage d'urgence (19).

6. Système de soupape (5) selon la revendication 4, **caractérisé en ce que** la soupape de desserrage (10) est disposée avant un embranchement (137) conduisant aux deux branches de conduite de commande.

7. Système de soupape (5) selon l'une des revendications précédentes, **caractérisé en ce que** la soupape de desserrage (5) présente
a) une jonction (13) pouvant être raccordée à une tête d'attelage réserve,
b) une jonction (14) pour la pression de commande pour la soupape de freinage d'urgence (19),
c) une jonction (15) qui peut être raccordée à un réservoir, et
d) une jonction (16), par le biais de laquelle une alimentation de la soupape de freinage d'urgence (19) en air comprimé est possible quand le réservoir (4) est rempli.

8. Système de soupape (5) selon l'une des revendications précédentes, **caractérisé en ce que,** entre une jonction (25) de la soupape de freinage d'urgence (19) et une jonction (46) de la soupape à ressort accumulateur (20), il est intercalé une soupape antiretour (26) qui ouvre en direction de la soupape à ressort accumulateur (20) mais qui bloque en direction de la soupape de freinage d'urgence (19).

9. Système de soupape (5) selon l'une des revendications précédentes, **caractérisé en ce que** le système de soupape (5) ou une soupape de frein de remorque (11) du système de soupape (5) est constitué(e) sans jonction pour une tête d'attelage frein (3).

10. Système de soupape (5) selon l'une des revendications précédentes, **caractérisé en ce qu'**un espace de commande (38) de la soupape de freinage d'urgence (19) est raccordé, par le biais d'une soupape antiretour (42), à une jonction (23) pouvant être raccordée au réservoir (4) et/ou à une jonction (25) pouvant être raccordée à la soupape à ressort accumulateur (20), la soupape antiretour (42) ouvrant en direction de la jonction (23) pouvant être raccordée au réservoir (4) et/ou de la jonction (25) pouvant être raccordée à la soupape à ressort accumulateur (20), mais bloquant en direction de l'espace de commande (38).

11. Système de soupape (5) selon l'une des revendications précédentes, **caractérisé en ce que** la soupape de freinage d'urgence (19) et/ou la soupape à ressort accumulateur (20) est/sont constituée(s) en tant que soupape à tiroir.

12. Système de soupape (5) selon l'une des revendications précédentes, **caractérisé en ce que** la soupape à ressort accumulateur (20) présente
a) une jonction (45) pour une pression de commande,
b) une jonction (46) pour un raccordement à la soupape de freinage d'urgence (19) et
c) une jonction (49) pour un raccordement à la soupape de stationnement (12).

13. Système de soupape (5) selon l'une des revendications précédentes, **caractérisé en ce que** la soupape de freinage d'urgence (19) présente
a) une jonction (21) pour une pression de commande,
b) une jonction (23) pour un raccordement au réservoir (4),
c) une jonction (25) pour un raccordement à la soupape à ressort accumulateur (20) et
d) une jonction (27) pour une sortie d'une pression de commande pour un frein de service.

14. Système de soupape (5) selon l'une des revendications précédentes, **caractérisé en ce que** la soupape à ressort accumulateur (20) possède une jonction (25) qui est raccordée
a) aussi bien à un espace de commande (58) de la soupape à ressort accumulateur (20)
b) qu'à une jonction (46) de la soupape à ressort accumulateur (20) qui, dans une position de la soupape à ressort accumulateur (20), est raccordée à la soupape de stationnement (12) par le biais de la soupape à ressort accumulateur (20).

15. Système de soupape (5) selon l'une des revendications précédentes, **caractérisé en ce que** la soupape de freinage d'urgence (19) est raccordée par le biais d'une électrovanne (92) à un espace de commande (58) de la soupape à ressort accumulateur (20).

16. Système de soupape (5) selon l'une des revendications précédentes, **caractérisé en ce qu'**un tiroir à soupape (52) est formé avec un piston différentiel (93).

17. Système de soupape (5) selon la revendication 16, **caractérisé en ce que** le piston différentiel (93)
a) possède une première surface de commande (53) qui peut être exposée à la pression sur la tête d'attelage réserve (2), de même
b) qu'il possède une deuxième surface de commande (94) qui peut être exposée à une pression de commande commandée par une unité de commande (72).

18. Système de soupape (5) selon la revendication 17, **caractérisé en ce que** l'unité de commande (72) qui commande la pression de commande agissant sur la deuxième surface de commande (94) suscite également une modulation de la pression de frein de service.

19. Système de soupape (5) selon l'une des revendications précédentes, **caractérisé par** la présence d'une soupape de sélection de circuit (71),
a) une entrée (77) de la soupape de sélection de circuit (71) étant raccordée à une jonction (27) de la soupape de freinage d'urgence (19),
b) une entrée (75) de la soupape de sélection de circuit (71) étant raccordée à la tête d'attelage frein (3) et
c) une sortie (79) de la soupape de sélection de circuit (71) étant raccordée à une jonction de commande (80) d'une unité de commande (72) pour la commande d'une pression de frein de service.

20. Système de soupape (5) selon la revendication 19, **caractérisé en ce que,** avec la soupape de sélection de circuit (71), priorité est donnée à la jonction (75) raccordée à la tête d'attelage frein (3).

21. Système de soupape (5) selon l'une des revendications précédentes, **caractérisé par** la présence d'une soupape de sélection de circuit (73),
a) une entrée (85) de la soupape de sélection de circuit (73) étant raccordée à une conduite de frein de service (83),
b) une entrée (86) de la soupape de sélection de circuit (73) étant raccordée à une jonction (63) de la soupape de stationnement (12) et
c) une sortie (88) de la soupape de sélection de circuit (73) prescrivant la pression dans une conduite de frein à ressort accumulateur (90).

22. Système de soupape (5) selon la revendication 21, **caractérisé en ce que** la sortie (88) de la soupape de sélection de circuit (73) est raccordée à la conduite de frein à ressort accumulateur (90) par le biais d'une soupape de desserrage rapide (74).

23. Groupe de systèmes de soupape, avec
a) un premier groupe partiel avec des systèmes de soupape (5) selon l'une des revendications précédentes et
b) un deuxième groupe partiel avec des systèmes de soupape, dans lesquels
ba) le boîtier (112) d'une soupape de frein de remorque est, quant à la construction, constitué de façon identique au boîtier (112) d'une soupape de frein de remorque (11) des systèmes de soupape (5) du premier groupe partiel,
bb) mais aucune soupape de freinage d'urgence (19) et/ou aucune soupape à ressort accumulateur (20) n'est présente dans la soupape de frein de remorque (11).
